# FASCICULE DE BREVET EUROPEEN

(11) **EP 2 356 713 B1**
(45) Date de publication et mention de la délivrance du brevet: **29.08.2012**
(21) Numéro de dépôt: 09753093.5
(22) Date de dépôt: 12.11.2009
(51) Int. Cl.: C25B 9/00, H01M 8/12, H01M 4/86

(54) **SUBSTRAT EN MÉTAL OU ALLIAGE MÉTALLIQUE POREUX, SON PROCÉDÉ DE PRÉPARATION, ET CELLULES D'EHT OU DE SOFC À MÉTAL SUPPORT COMPRENANT CE SUBSTRAT**
AUS EINEM PORÖSEN METALL ODER METALLLEGIERUNG HERGESTELLTES SUBSTRAT, HERSTELLUNGSVERFAHREN DAFÜR UND HTE- ODER SOFC-ZELLEN, DIE EIN DIESES SUBSTRAT UMFASSENDES TRÄGERMETALL AUFWEISEN
SUBSTRATE MADE OF A POROUS METAL OR METAL ALLOY, ITS METHOD OF PRODUCTION AND HTE OR SOFC CELLS HAVING A SUPPORT METAL COMPRISING THIS SUBSTRATE

(30) Priorité: 12.11.2008 FR 0857664
(43) Date de publication de la demande: 17.08.2011
(73) Titulaire: Commissariat à l'Énergie Atomique et aux Énergies Alternatives, 75015 Paris (FR)
(72) Inventeur: MOUGIN, Julie, F-38530 Pontcharra (FR); PIETRI, Thomas, F-38300 Bourgoin-Jallieu (FR)
(74) Mandataire: Ilgart, Jean-Christophe
(86) Numéro de dépôt international: PCT/EP2009/065080
(87) Numéro de publication internationale: WO 2010/055111

(56) Documents cités:
- EP-A- 1 353 394
- EP-A- 1 760 817
- WO-A-02/27846
- WO-A-02/35628
- WO-A-03/107455
- WO-A-2004/012287
- WO-A-2006/082057
- WO-A-2007/105096
- WO-A-2008/048445
- GB-A- 2 386 126
- GB-A- 2 400 723
- US-A1- 2003 175 439
- US-A1- 2006 251 947
- US-A1- 2008 206 616
- US-B1- 6 228 521
- EKATERINA V TSIPIS ET AL: "Electrode materials and reaction mechanisms in solid oxide fuel cells: a brief review; I. Performance-determining factors" JOURNAL OF SOLID STATE ELECTROCHEMISTRY ; CURRENT RESEARCH AND DEVELOPMENT IN SCIENCE AND TECHNOLOGY, SPRINGER, BERLIN, DE, vol. 12, no. 9, 27 novembre 2007 (2007-11-27), pages 1039-1060, XP019593233 ISSN: 1433-0768
- EKATERINA V TSIPIS ET AL: "Electrode materials and reaction mechanisms in solid oxide fuel cells: a brief review; II. Electrochemical behavior vs. materials science aspects" JOURNAL OF SOLID STATE ELECTROCHEMISTRY ; CURRENT RESEARCH AND DEVELOPMENT IN SCIENCE AND TECHNOLOGY, SPRINGER, BERLIN, DE, vol. 12, no. 11, 11 juillet 2008 (2008-07-11), pages 1367-1391, XP019593289 ISSN: 1433-0768
- LIU Y ET AL: "Nanostructured and functionally graded cathodes for intermediate-temperature SOFCs" FUEL CELLS BULLETIN, ELSEVIER ADVANCED TECHNOLOGY, KIDLINGTON, GB, vol. 2004, no. 10, 1 octobre 2004 (2004-10-01), pages 12-15, XP004604485 ISSN: 1464-2859
- GREENE E S ET AL: "Mass transfer in graded microstructure solid oxide fuel cell electrodes" JOURNAL OF POWER SOURCES, ELSEVIER, AMSTERDAM, NL, vol. 161, no. 1, 20 octobre 2006 (2006-10-20), pages 225-231, XP025084981 ISSN: 0378-7753 [extrait le 2006-10-20]
- CHRISTIANSEN N ET AL: "Solid oxide fuel cell development at Topsoe Fuel Cell and Riso" FUEL CELLS BULLETIN, ELSEVIER ADVANCED TECHNOLOGY, KIDLINGTON, GB, vol. 2006, no. 8, 1 août 2006 (2006-08-01) , pages 12-15, XP025165032 ISSN: 1464-2859 [extrait le 2006-08-01]
- TUCKER ET AL: "Performance of metal-supported SOFCs with infiltrated electrodes" JOURNAL OF POWER SOURCES, ELSEVIER, AMSTERDAM, NL, vol. 171, no. 2, 8 septembre 2007 (2007-09-08), pages 477-482, XP022238048 ISSN: 0378-7753 cité dans la demande
- ANTEPARA I ET AL: "Evaluation of ferritic steels for use as interconnects and porous metal supports in IT-SOFCs" JOURNAL OF POWER SOURCES, ELSEVIER, AMSTERDAM, NL, vol. 151, 10 octobre 2005 (2005-10-10), pages 103-107, XP025269237 ISSN: 0378-7753 [extrait le 2005-10-10] & VILLARREAL I ET AL: "Metal-supported solid oxide fuel cells" ELECTROCHEMICAL AND SOLID-STATE LETTERS ELECTROCHEM. SOC USA, vol. 6, no. 9, septembre 2003 (2003-09), pages A178-A179, ISSN: 1099-0062 & ALAVA I ET AL: "Development of metal supported SOFC technology in Ikerlan" MEETING ABSTRACTS - 207TH MEETING OF THE ELECTROCHEMICAL SOCIETY - MEETING ABSTRACTS 2005 ELECTROCHEMICAL SOCIETY INC. US, 2005, page 811, cité dans la demande
- MOLIN S ET AL: "Evaluation of porous 430L stainless steel for SOFC operation at intermediate temperatures" JOURNAL OF POWER SOURCES, ELSEVIER, AMSTERDAM, NL, vol. 181, no. 1, 15 juin 2008 (2008-06-15) , pages 31-37, XP022651335 ISSN: 0378-7753 [extrait le 2008-05-09] cité dans la demande

## Description

### DOMAINE TECHNIQUE

L'invention concerne un substrat en métal ou en alliage métallique poreux.

L'invention concerne en outre un procédé de préparation de ce substrat par pressage-frittage.

L'invention a enfin trait à une cellule d'électrolyseur haute température (« EHT » ou « HTE » en langue anglaise) ou de pile à combustible haute température (« SOFC » ou « Solid Oxide Fuel Cell » en langue anglaise), plus précisément une cellule d'électrolyseur haute température ou de pile à combustible haute température à métal support (« MSC » ou « Metal Supported Cell » en langue anglaise) comprenant ledit substrat.

Le domaine technique de l'invention peut ainsi être défini de manière générale comme celui des nouvelles technologies de l'énergie, plus particulièrement comme celui des électrolyseurs haute température et des piles à combustible haute température et, encore plus précisément, comme celui des cellules des électrolyseurs haute température et des piles à combustible haute température à métal support.

### ÉTAT DE LA TECHNIQUE ANTÉRIEURE

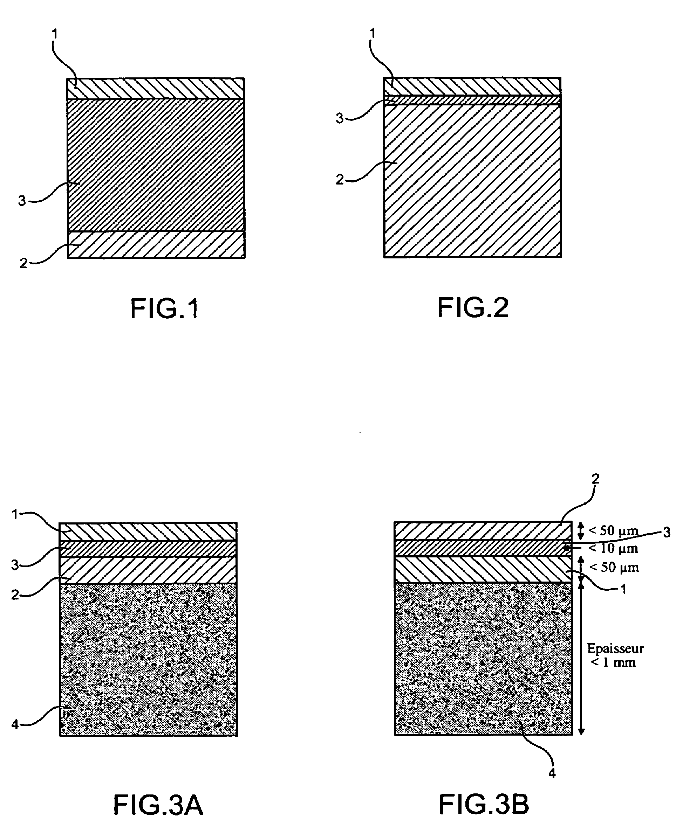

La première génération de cellules d'électrolyseur haute température ou de piles à combustible haute température comprenait un support formé par l'électrolyte et était ainsi dénommée Cellule à électrolyte support (« ESC » ou « Electrolyte-Supported Cell » en langue anglaise). Une telle cellule à électrolyte support est représentée sur la figure 1 : l'électrode à oxygène O₂ (1) et l'électrode à hydrogène ou à eau (2) sont disposées de part et d'autre de l'électrolyte épais qui constitue le support (3) .

La deuxième génération de cellules d'électrolyseur haute température ou de piles à combustible haute température comprenait un support formé par une électrode et était ainsi dénommée Cellule à anode support (« ASC » ou « Anode-Supported Cell » en langue anglaise) en terminologie « SOFC » ou Cellules à cathode support (« CSC » ou « Cathode-Supported Cell » en langue anglaise) en terminologie « EHT ». Une telle cellule à électrode support « ASC » ou « CSC » est représentée sur la figure 2 : l'électrolyte (3) et l'électrode à oxygène (1) sont disposés sur l'électrode épaisse à hydrogène ou à eau (2) qui sert de support.

La troisième génération de cellules d'électrolyseur haute température ou de piles à combustible haute température, à laquelle nous nous intéressons plus particulièrement dans la présente comprend un support métallique poreux et est donc dénommée Cellule à métal support (« MSC »). Une telle cellule à métal support peut se présenter selon deux configurations qui sont respectivement représentées sur les figures 3A et 3B selon que l'électrode qui est placée au contact du support métallique poreux est l'électrode à hydrogène ou à eau (2) (figure 3A) ou bien l'électrode à oxygène (1) (figure 3B). Plus de détails sur ces divers types de « EHT » et de « SOFC » pourront être trouvés dans le document [1].

Les cellules à métal support représentées sur les figures 3A et 3B comportent quatre couches (dont une couche métallique et trois couches en céramique), à savoir :
- le support métallique poreux (4), généralement d'une épaisseur inférieure à 1 mm qui assuré :
   ○ le support mécanique de la cellule grâce à ses propriétés mécaniques et à son épaisseur,
   ○ la distribution des gaz jusqu'à l'électrode en vue des réactions électrochimiques grâce à sa porosité,
   ○ le collectage du courant grâce à sa nature métallique conductrice.
- l'électrode H₂/H₂O (2) qui est l'anode pour une SOFC, et la cathode pour un EHT. Grâce au support métallique (4) cette électrode peut être rendue plus mince, avec par exemple une épaisseur inférieure à 50 µm, sa tenue aux cycles redox est ainsi meilleure et son coût est moins élevé ;
- l'électrolyte (3), conducteur ionique pour les ions O²⁻. L'électrolyte (3) peut être rendu plus mince, avec par exemple une épaisseur inférieure à 10 µm, sa température de fonctionnement peut ainsi être abaissée ;
- l'électrode à O₂ (1) qui est la cathode pour une SOFC, et l'anode pour un EHT. Cette électrode (1) peut être rendue plus mince avec par exemple une épaisseur inférieure à 50 µm.

Dans les documents [2] et [3] sont mentionnés différents types de matériaux métalliques pour élaborer les supports métalliques poreux. Il s'agit tout d'abord d'alliages métalliques produits par métallurgie classique, et ensuite d'alliages produits par métallurgie des poudres, qui sont présentés dans ces documents comme étant de meilleurs candidats pour réaliser le support métallique [2-3].

Sur ces supports sont déposées les couches céramiques (anode, électrolyte, cathode) par un procédé de dépôt plasma sous vide (« VPS », ou « Vacuum Plasma Spraying »), qui ne nécessite pas d'étape de frittage à haute température [2-3].

Le procédé pour réaliser le poreux n'est pas décrit dans ces documents, et une optimisation de la microstructure et de la porosité avec éventuellement un gradient de celle-ci, n'est pas non plus mentionnée.

En outre, une oxydation partielle du support métallique poreux n'est ni décrite, ni suggérée dans les documents [2] et [3].

Dans les documents [5] à [8] est décrit un support métallique poreux. Deux options sont envisagées pour déposer ensuite les couches céramiques sur ce support :
- soit les couches céramiques sont déposées sur le support métallique « cru », c'est-à-dire non fritté, et l'ensemble du support et des couches céramiques est ensuite cofritté à haute température, mais sous atmosphère réductrice pour éviter une oxydation importante du support métallique ;
- soit les couches céramiques sont déposées sur le support métallique déjà fritté et sont ensuite frittées indépendamment, ce qui doit être fait à plus basse température, sans doute pour éviter l'oxydation du métal et sa densification.

Les techniques de dépôt des couches céramiques sont majoritairement des techniques classiques par voie humide telles que le coulage en bande ou la sérigraphie.

Le support métallique poreux peut, selon le document [4], être produit par coulage en bande [4].

Le document [8] fait état d'un support métallique poreux tubulaire réalisé par pressage isostatique, sans doute parce que la géométrie tubulaire ne permet pas le coulage en bande.

Les documents [4] à [8] ne font pas mention d'une optimisation de la microstructure, ou de la porosité avec éventuellement un gradient quelle que soit la technique utilisée. Les documents [4] à [8] ne font pas non plus mention d'une quelconque étape d'oxydation partielle préalable (préoxydation) du support métallique poreux avant son utilisation.

Dans les documents [9], [10], et [11], on utilise un support métallique bi-zone qui est dense sur les côtés pour assurer l'étanchéité et percé au milieu pour distribuer les gaz.

Les trous dans la partie centrale du support sont réalisés par usinage (photochimique [10] ou laser [11]). Les trous formés ont un diamètre de 10 à 30 µm. Le document [9] propose une structure alvéolée pour cette partie poreuse du support.

Du fait de la technologie utilisée pour produire les trous, la taille des trous est identique, sans gradient, sur toute l'épaisseur du support métallique et il n'y a pas d'optimisation de la microstructure.

Une oxydation du support métallique préalablement à son utilisation (préoxydation) n'est ni mentionnée ni suggérée dans ces documents.

Les couches céramiques sont, quant à elles, déposées par des techniques par voie humide.

La gamme de températures de fonctionnement visée dans les documents [9], [10], et [11] est seulement de 500°C à 600°C.

Le document [12] concerne des cellules à métal support tubulaires. Il est simplement indiqué que le tube support en poreux métallique est produit par des « techniques à coût industrialisables », mais sans plus d'informations.

Le document [13] fait mention de cellules à métal support dont les supports métalliques poreux sont constitués de plaques de métal (« Hastelloy ») de porosité 27,5% [13]. Il semblerait qu'il s'agisse plutôt de plaques percées de trous du type de celles décrites dans les documents [9], [10], et [11].

Le document [14] a trait à des cellules à métal support tubulaires, dans lesquelles le support métallique est poreux avec une porosité entre 20 et 75%. Ce support métallique est préparé par un procédé par voie humide et il n'est pas question d'une optimisation de sa porosité, et encore moins d'un gradient de celle-ci, ni d'une oxydation du support métallique avant son utilisation (préoxydation).

Dans le document [15] est exposé un concept appelé « bipolar plate-supported SOFC ». Une plaque métallique, qui agit comme interconnecteur (ou plaque bipolaire) entre deux cellules adjacentes d'un empilement, sert aussi de support pour les cellules céramiques. Entre cette plaque dense et les cellules céramiques, des poreux métalliques sont intercalés. Ils sont déposés par des techniques par voie humide tout comme les couches céramiques et sont cofrittés avec celles-ci [15]. Il n'est pas fait mention dans ce document [15] d'une optimisation de la porosité des poreux métalliques, et encore moins d'un quelconque gradient de celle-ci, ni d'une oxydation de ces poreux métalliques préalablement à leur utilisation.

Le document [1] déjà cité, fait mention de cellules avec un support métallique en alliage de FeCr, mais aucun détail sur le type de support, et notamment sa porosité, ainsi que sa mise en forme n'est donné.

Le document [16] concerne une cellule à métal support dont le support métallique est une plaque métallique présentant des cavités et canaux pour distribuer les gaz jusqu'à l'électrode, ces canaux étant réalisés par attaque chimique. On ne peut donc véritablement parler de porosité dans ce document et encore moins d'une optimisation ou d'un gradient de celle-ci. De plus, aucune oxydation du support métallique préalablement à son utilisation (préoxydation) n'est évoquée dans ce document.

Il est par ailleurs à noter que dans tous les documents cités ci-dessus l'application « EHT » est rarement voire jamais évoquée.

Toutefois, le document [17] décrit un procédé pour préparer une SOFC réversible, c'est-à-dire pouvant fonctionner en mode SOFC et en mode EHT. Dans ce document, l'utilisation d'un support métallique poreux, notamment en acier inoxydable ferritique est mentionnée. La porosité du support métallique est réalisée par addition d'agents porogènes pendant la fabrication du support et la porosité peut être finement ajustée en agissant sur la quantité d'agents porogènes ajoutés. Il n'est cependant pas fait mention dans ce document de taille de pores ni de gradient de porosité. En outre, dans les exemples de ce document, il est précisé que le support poreux est produit par coulage en bande.

Enfin, une oxydation du support poreux préalablement à son utilisation (préoxydation) n'est ni mentionnée ni suggérée dans ce document.

Le document de Molins et al. [18] présente un poreux métallique, produit par pressage frittage sous hydrogène à partir de la nuance commerciale d'acier inoxydable 430L et évalue sa tenue à l'oxydation. Une porosité de 40% est indiquée, et il est conclu que la tenue à l'oxydation de ce poreux n'est pas satisfaisante pour une application en SOFC. Ce document ne mentionne pas le dépôt de couches céramiques sur ce poreux, ni l'optimisation de sa microstructure et en particulier de sa porosité, ni l'oxydation du poreux préalablement à son utilisation, à savoir la préoxydation du poreux.

Le Document WO-A1-2007/105096 décrit une pile à combustible qui comprend essentiellement une unité de production d'électricité avec un électrolyte et une électrode ; un séparateur et un bloc poreux qui est intercalé entre l'unité de production d'électricité et le séparateur et qui est alimenté en gaz de réaction; une section de « prévention » prévue sur le bloc poreux pour empêcher le gaz de s'échapper du bloc poreux.

Dans ce document, le bloc poreux incluant la section de prévention ne présente pas un gradient de porosité depuis la première surface principale jusqu'à la seconde surface principale mais un gradient latéral.

En outre, un substrat métallique poreux partiellement oxydé obtenu au moyen d'une oxydation partielle par un gaz oxydant n'est ni décrit, ni suggéré dans ce document.

Le Document EP-A-1 760 817 concerne une SOFC planaire comprenant deux composants. Le premier composant comprend au moins une couche métallique poreuse, de préférence deux couches métalliques poreuses, et de préférence encore 3 couches métalliques poreuses.

Un substrat métallique poreux partiellement oxydé obtenu au moyen d'une oxydation partielle par un gaz oxydant n'est ni décrit, ni suggéré dans ce document.

Le Document WO-A2-2008/048445 a trait à une « SOFC » qui comprend une anode en un cermet comprenant une phase nickel et une phase céramique.

Ce document décrit une couche en cermet et non une couche métallique à gradient de porosité.

En outre, cette couche constitue une anode et non le support métallique d'une cellule de pile à combustible.

De plus, un substrat métallique poreux partiellement oxydé obtenu au moyen d'une oxydation partielle par un gaz oxydant n'est ni décrit, ni suggéré dans ce document.

Le Document WO-A-03/107455 concerne un procédé pour préparer des plaques métalliques avec un gradient de composition depuis l'une des surfaces de la plaque jusqu'à l'autre surface. Cette plaque est destinée notamment à être utilisée comme plaque d'interconnexion pour les SOFCs.

Dans ce document, on prépare une plaque avec un gradient de composition et non un gradient de porosité car le gradient de composition n'implique pas un gradient de porosité.

De plus, un substrat métallique poreux partiellement oxydé obtenu au moyen d'une oxydation partielle par un gaz oxydant n'est ni décrit, ni suggéré dans ce document.

Le Document WO-A-02/35628 décrit une SOFC qui comprend un support en acier inoxydable ferritique comprenant une région non poreuse et une région poreuse ; une plaque bipolaire en acier inoxydable ferritique située sous une surface de la région poreuse du support ; une première couche d'électrode située sur l'autre surface de la région poreuse du support ; une couche d'électrolyte située sur la première couche d'électrode ; et une seconde couche d'électrode située sur la couche d'électrolyte.

Il n'y a pas dans le support de ce document de gradient de porosité depuis la première surface principale jusqu'à la seconde surface principale.

De plus, un substrat métallique poreux partiellement oxydé obtenu au moyen d'une oxydation partielle par un gaz oxydant n'est ni décrit ni suggéré dans ce document.

Le Document WO-A-02/27846 décrit des piles à combustible qui comprennent des éléments poreux qui permettent le passage des fluides et conduisent le courant électrique.

Un substrat métallique poreux partiellement oxydé obtenu au moyen d'une oxydation partielle par un gaz oxydant n'est ni décrit, ni suggéré dans ce document.

Aucun des documents WO-A1-2007/105096, EP-A-1 760 817, WO-A2-2008/048445, WO-A-03/107455, WO-A-02/35628 et WO-A-02/27846 ne décrit ni ne suggère un substrat métallique poreux partiellement oxydé, obtenu au moyen d'une oxydation partielle par un gaz oxydant, et *a fortiori* la combinaison d'une oxydation partielle du substrat avec un gradient de porosité depuis une première surface principale jusqu'à une seconde surface principale.

Dans aucun des documents cités ci-dessus la question de l'optimisation du support métallique poreux pour favoriser l'accrochage des couches céramiques n'est évoquée, alors que c'est un problème crucial pour le bon fonctionnement d'une cellule SOFC-EHT.

Il existe donc un besoin pour un support métallique poreux pour cellule d'électrolyseur haute température (« EHT » ou « HTE » en langue anglaise) ou de pile à combustible haute température (« SOFC » ou « Solid Oxide Fuel Cell ») qui permette un excellent accrochage des couches céramiques et, en outre, une excellente tenue à l'oxydation par les gaz en cours d'utilisation.

Il existe plus généralement un besoin pour un tel support métallique poreux qui présente des propriétés répondant aux critères et exigences suivants :

### Propriétés physiques et physico-chimiques :

1°) le support doit jouer le rôle de support mécanique de la cellule : il doit donc présenter une certaine cohésion et une épaisseur suffisante, ainsi que des propriétés mécaniques suffisantes ;
2°) le support doit assurer l'acheminement et la distribution des gaz jusqu'à l'électrode : il doit donc présenter une porosité adaptée aux gaz et aux débits envisagés ;
3°) le support doit assurer le collectage du courant :
   - il doit donc être conducteur électronique, ce qui est possible de par sa nature métallique,
   - il doit rester conducteur électronique au cours du temps, lors d'un fonctionnement de longue durée de la cellule à température élevée, c'est-à-dire qu'il doit notamment résister à l'oxydation dans les atmosphères considérées à savoir H₂/H₂O ou O₂/air selon la configuration choisie ;
4°) le support doit permettre le dépôt de la première électrode, qui est un matériau céramique (oxyde), ou un cermet métal/oxyde (typiquement Ni-YSZ), il doit donc :
   - avoir une surface qui permette un bon accrochage aussi bien physique que chimique de cette couche de céramique ou de cermet ;
   - pouvoir supporter l'étape de frittage des couches céramiques des électrodes et de l'électrolyte qui peut être nécessaire suivant les procédés de dépôt des couches céramiques choisis. Pour pouvoir supporter cette étape de frittage le support doit :
      - conserver sa porosité lors de ce traitement,
      - ne pas s'oxyder de manière importante.
   - avoir un coefficient d'expansion thermique compatible avec celui des couches de céramiques ou de cermet déposées ;
   - ne pas réagir chimiquement avec le matériau d'électrode (oxyde ou cermet) déposé.

### Propriétés économiques :

5°) le support doit être bon marché, un des objectifs étant de réduire le coût des cellules à métal support par rapport aux autres types de cellules ;
6°) le support doit pouvoir être mis en forme avec des techniques simples, rapides, robustes et peu onéreuses ;
7°) le support doit pouvoir être mis en forme avec des tailles et des formes variées qui peuvent être nécessaires pour l'application (formes circulaires, carrées, petite taille, grande taille...).

Le but de la présente invention est de fournir un support métallique poreux pour cellule d'électrolyseur haute température (« EHT » ou « HTE » en langue anglaise) ou de pile à combustible haute température (« SOFC » ou « Solid Oxide Fuel Cell ») qui réponde entre autres aux besoins mentionnés ci-dessus, qui présente les propriétés citées plus haut, et qui satisfasse aux critères et exigences énumérés dans ce qui précède.

Le but de la présente invention est encore de fournir un tel support métallique poreux qui ne présente pas les inconvénients, défauts, limitations et désavantages des supports poreux métalliques de l'art antérieur, représenté notamment par les documents cités plus haut, et qui surmonte les problèmes des supports métalliques poreux de l'art antérieur.

### EXPOSÉ DE L'INVENTION

Ce but et d'autres encore sont atteints, conformément à l'invention, par un substrat partiellement oxydé, obtenu en soumettant un substrat en métal ou alliage métallique poreux comprenant des particules d'au moins un métal ou alliage métallique liées par frittage, ledit substrat comprenant une première surface principale et une seconde surface principale, et ledit substrat présentant un gradient de porosité depuis la première surface principale jusqu'à la seconde surface principale ; à une oxydation partielle par un gaz oxydant tel que l'oxygène et/ou l'air.

Avantageusement, ladite oxydation partielle peut être réalisée à haute température et pendant une courte durée.

Avantageusement, la première surface principale et la seconde surface principale peuvent être des surfaces planes et parallèles. Et le substrat est donc alors un substrat planaire.

Avantageusement, la première surface principale peut être une surface supérieure et la seconde surface principale peut être une surface inférieure.

Avantageusement, la porosité peut diminuer depuis la seconde surface principale jusqu'à la première surface principale, et le substrat peut comprendre alors depuis la seconde surface principale vers la première surface principale au moins une couche de forte porosité au contact de la seconde surface principale et une couche de faible porosité au contact de la première surface principale.

La couche de forte porosité a une porosité généralement de 25% à 65%, avantageusement de 30% à 60%, et la couche de faible porosité a une porosité généralement de 10% à 40%, avantageusement de 10% à 30%, étant entendu que la couche de faible porosité a une porosité inférieure à la couche de forte porosité.

La couche de forte porosité comprend généralement des gros pores d'une taille, par exemple d'un diamètre, par exemple de plus de 20 µm à 50 µm, et la couche de faible porosité comprend généralement des petits pores d'une taille, par exemple d'un diamètre, par exemple de 1 µm à 20 µm.

La couche de forte porosité peut avantageusement avoir une épaisseur de 100 µm à 5 mm et la couche de faible porosité peut avantageusement avoir une épaisseur de 20 à 500 µm, de préférence de 50 à 100 µm.

Avantageusement, le métal ou l'alliage est choisi parmi le fer, les alliages à base de fer, le chrome, les alliages à base de chrome, les alliages Fer-chrome, les aciers inoxydables, le nickel, les alliages à base de nickel, les alliages nickel-chrome, les alliages contenant du cobalt, les alliages contenant du manganèse, l'aluminium et les alliages contenant de l'aluminium.

La couche de faible porosité peut être en un premier métal ou alliage métallique et la couche de forte porosité peut être en un second métal ou alliage métallique ou bien la couche de forte porosité et la couche de faible porosité peuvent être en un même métal ou alliage métallique.

Avantageusement, le premier métal ou alliage peut être choisi parmi le chrome, les alliages à base de chrome, les alliages Fer-chrome, les aciers inoxydables, le nickel, les alliages à base de nickel, les alliages nickel-chrome.

Avantageusement, le second métal ou alliage peut être choisi parmi le chrome, les alliages à base de chrome, les alliages Fer-chrome, les aciers inoxydables, le nickel, les alliages à base de nickel, les alliages nickel-chrome.

Avantageusement, la première surface principale du substrat est une surface supérieure et le premier métal ou alliage constituant la couche de faible porosité peut être choisi afin de limiter l'oxydation en surface et/ou la réactivité avec un matériau d'électrode tel qu'un oxyde ou un cermet et/ou pour accommoder les dilatations.

Avantageusement, une ou plusieurs couche(s) intermédiaire(s) peut(peuvent) être prévue(s) entre la couche de forte porosité et la couche de faible porosité, la ou les couche(s) intermédiaire(s) présentant une porosité telle que la porosité du substrat diminue depuis la couche de forte porosité jusqu'à la couche de faible porosité.

Le substrat partiellement oxydé selon l'invention est obtenu en soumettant un substrat en métal ou en alliage métallique poreux tel que décrit plus haut, que l'on peut qualifier de substrat « non oxydé », à une oxydation partielle par un gaz oxydant tel que l'air et/ou l'oxygène.

Cette oxydation est une oxydation partielle contrôlée c'est-à-dire qu'elle est réalisée dans des conditions par exemple de température et de pression telles qu'elles conduisent à un substrat partiellement oxydé tel que défini dans la présente invention et non totalement oxydé.

Cette oxydation partielle contrôlée est réalisée de préférence à haute température, notamment à une température de 600°C à 1600°C, de préférence de 800 ou 900°C à 1200°C, et pendant une courte durée.

Par « courte durée », on entend généralement une durée de 1 à 20 minutes, de préférence de 1 à 10 minutes.

Par « substrat partiellement oxydé » au sens de l'invention, on entend que substantiellement toutes les particules du substrat, de préférence toutes les particules du substrat, sont oxydées, et que chacune de ces particules est partiellement oxydée, généralement sur une couche de surface, et non totalement oxydée.

En d'autres termes, le terme « partiellement » se rapporte plutôt à l'oxydation de chaque particule, grain, et non au substrat pris dans son ensemble (dont seulement une partie géométriquement limitée serait oxydée), car substantiellement toutes les particules et de préférence toutes les particules sont chacune partiellement oxydées. Ces particules se trouvent dans tout le volume du substrat.

Le substrat ou support métallique poreux, partiellement oxydé, selon l'invention n'a jamais été décrit dans l'art antérieur tel que représenté notamment par les documents cités plus haut. En particulier, le gradient de porosité présenté par le support ou substrat selon l'invention combiné avec une oxydation partielle ne sont ni mentionnés ni suggérés dans l'art antérieur.

Le substrat selon l'invention peut être qualifié de « substrat préoxydé » en ce sens qu'il est soumis à une oxydation préalablement à son utilisation, sa mise en oeuvre. Cette préoxydation qui fait partie du procédé de fabrication du substrat ne doit pas être confondue avec l'oxydation à laquelle le substrat est soumis lors de son utilisation.

Le substrat ou support métallique poreux partiellement oxydé selon l'invention répond entre autre à l'ensemble des besoins mentionnés plus haut.

Le substrat ou support poreux partiellement oxydé selon l'invention présente des propriétés qui satisfont aux critères et exigences indiqués plus haut, le substrat ou support poreux selon l'invention apporte une solution aux problèmes posés par les substrats de l'art antérieur et n'en présente aucun des inconvénients.

En particulier, le support ou substrat poreux partiellement oxydé selon l'invention peut être facilement fabriqué par pressage-frittage qui est une technique rapide, robuste et peu onéreuse.

La microstructure particulière du substrat ou support selon l'invention avec notamment un gradient de porosité permet de respecter le cahier des charges défini ci-dessus pour un tel support et favorise en particulier la distribution des gaz ainsi que l'accrochage des couches céramiques.

En outre, les diverses couches qui peuvent constituer le support ou substrat peuvent être en des métaux ou alliages différents et le métal ou alliage de la couche supérieure peut être choisi afin de limiter l'oxydation en surface et/ou la réactivité avec un matériau d'électrode tel qu'un oxyde ou un cermet et/ou adapter les coefficients d'expansion thermique (CET) des matériaux en regard.

L'invention concerne en outre un procédé de préparation du substrat tel que décrit ci-dessus, dans lequel on effectue les étapes successives suivantes :
- on dépose successivement, dans un moule vertical de taille et de forme adaptées à la forme et à la taille du substrat, au moins deux couches de poudres métalliques ayant des granulométries décroissantes, respectivement croissantes ;
- on presse lesdites couches de manière à obtenir un substrat poreux cru ;
- on sépare le substrat poreux cru du moule ;
- on fritte le substrat poreux cru ;
- à l'issue du frittage, on réalise une oxydation partielle du substrat en mettant en contact le substrat avec un gaz oxydant tel que l'air et/ou l'oxygène.

Avantageusement, l'oxydation partielle peut être réalisée à une température élevée et pendant une courte durée.

Avantageusement, on dépose d'abord une couche inférieure constituée par une poudre de forte granulométrie puis une couche supérieure constituée par une poudre de faible granulométrie ou vice et versa.

Généralement, la poudre de forte granulométrie a une granulométrie de plus de 50 µm à 500 µm, et la poudre de faible granulométrie a une granulométrie de 1 µm à 50 µm.

Avantageusement, une ou plusieurs couche(s) intermédiaire(s) constituée(s) par des poudres présentant une granulométrie intermédiaire entre la granulométrie de la poudre constituant la couche inférieure, respectivement supérieure de forte granulométrie, et la granulométrie de la poudre constituant la couche supérieure, respectivement inférieure de faible granulométrie, peut(peuvent) être déposée(s) entre la couche inférieure et la couche supérieure, la granulométrie de ces couches étant telle qu'elle diminue depuis la couche intermédiaire la plus proche de la couche constituée par une poudre de forte granulométrie jusqu'à la couche intermédiaire la plus proche de la couche constituée par une poudre de faible granulométrie.

Ces couches intermédiaires peuvent être au nombre de 1 à 8, de préférence leur nombre est inférieur ou égal à 5.

Toutes les couches de poudre (y compris les couches intermédiaires éventuelles) peuvent être constituées par un même alliage ou métal ou bien une ou plusieurs couches de poudre peuvent être constituées par un métal ou alliage différent des autres couches.

Le métal ou alliage de la couche de faible granulométrie qui est de préférence la couche supérieure peut être choisi afin de limiter l'oxydation en surface et/ou la réactivité avec un matériau d'électrode tel qu'un oxyde ou un cermet ; il peut être également judicieux d'adapter les coefficients d'expansion thermique (CET), en d'autres termes les dilatations, de ces 2 matériaux, à savoir d'une part le métal ou alliage de la couche de faible granulométrie et d'autre part le matériau d'électrode.

Avantageusement, le pressage peut être réalisé par compression uniaxiale.

Avantageusement, le pressage peut être réalisé avec une pression de 10 à 700 MPa, de préférence de 100 MPa.

Avantageusement, le frittage est réalisé sous une atmosphère contrôlée, avec une pression partielle d'oxygène inférieure à 10⁻²⁰ atm.

Avantageusement, le frittage est réalisé à une température comprise entre la température minimum de début de frittage et la température de densification totale du substrat, de préférence à une température correspondant à 85% de la température de densification totale du substrat.

Avantageusement, cette température est de 600°C à 1600°C, de préférence de 800°C à 1400°C, par exemple de 1200°C.

Avantageusement, la température de frittage peut être maintenue (palier de température) pendant une durée de une à quelques minutes, par exemple de 2 à 10 minutes, jusqu'à une ou plusieurs heures, par exemple de 2 à 10 heures, par exemple la durée du palier peut être de 3 heures.

Toutefois, un frittage par palier n'est pas obligatoire.

A l'issue du frittage, on réalise l'oxydation contrôlée partielle du substrat en mettant en contact le substrat avec un gaz oxydant tel que l'air et/ou l'oxygène.

Cette mise en contact est avantageusement réalisée à une température élevée, par exemple égale ou inférieure à la température à laquelle est réalisé le frittage, par exemple à une température de 600°C à 1600°C ; et pendant une courte durée, par exemple de 1 à 20 minutes, de préférence inférieure à 10 minutes.

Le procédé selon l'invention qui met en oeuvre une technique de pressage-frittage pour préparer un substrat à gradient de porosité n'a jamais été ni décrit ni suggéré dans l'art antérieur où les techniques citées pour préparer des substrats métalliques poreux sont essentiellement soit le coulage en bande, soit l'usinage de trous, et où la préparation d'un substrat à gradient de porosité n'est ni mentionnée, ni évoquée.

En outre, la dernière étape du procédé selon l'invention au cours de laquelle on réalise une oxydation partielle du substrat fritté n'est pas non plus ni mentionnée, ni suggérée.

Comme on l'a déjà précisé plus haut, la technique de pressage-frittage présente de nombreux avantages en matière de rapidité, fiabilité, robustesse et coût.

L'invention concerne en outre une cellule d'électrolyseur à haute température ou de pile à combustible à haute température comprenant un substrat ou support métallique poreux tel que décrit plus haut.

Plus précisément, cette cellule d'électrolyseur à haute température ou de pile à combustible à haute température comprend un substrat ou support métallique poreux tel que décrit plus haut, sur lequel sont successivement empilés une électrode à eau ou à hydrogène, un électrolyte, et une électrode à oxygène.

Ou bien cette cellule d'électrolyseur à haute température ou de pile à combustible à haute température comprend un substrat ou support métallique poreux tel que décrit plus haut, sur lequel sont successivement empilés une électrode à oxygène, un électrolyte, et une électrode à hydrogène ou à eau.

D'autres effets et avantages de l'invention apparaitront mieux à la lecture de la description détaillée qui va suivre, faite en référence aux dessins joints dans lesquels :

### BRÈVE DESCRIPTION DES DESSINS

- La figure 1 est une vue schématique en coupe verticale d'une cellule de « EHT » ou de « SOFC » à électrolyte support (« ESC ») ;
- la figure 2 est une vue schématique en coupe verticale d'une cellule de « EHT » ou de « SOFC » à électrode support (anode support : « ASC » en dénomination « SOFC » ou cathode support : « CSC » en dénomination « EHT ») ;
- la figure 3A est une vue schématique en coupe verticale d'une cellule de « EHT » ou de « SOFC » à métal support (« MSC ») dans une première configuration dans laquelle l'électrode qui placée au contact du support métallique poreux est l'électrode à hydrogène ou à eau ;
- la figure 3B est une vue schématique en coupe verticale d'une cellule de « EHT » ou de « SOFC » à métal support (« MSC ») dans une seconde configuration dans laquelle l'électrode qui placée au contact du support métallique poreux est l'électrode à oxygène ;
- la figure 4 est une vue schématique en coupe verticale d'une cellule de « EHT » ou de « SOFC » comprenant un support métallique poreux bicouche, à gradient de porosité selon l'invention, avec une couche inférieure très poreuse et une couche supérieure moins poreuse ;
- la figure 5 est une vue schématique en coupe verticale d'une cellule de « EHT » ou de « SOFC » comprenant un support métallique poreux à gradient de porosité selon l'invention, avec une couche inférieure très poreuse et une couche supérieure moins poreuse entre lesquelles sont intercalées des couches de porosité intermédiaires ;
- la figure 6 est une vue au microscope électronique d'un support métallique poreux selon l'invention ;
- la figure 7 est un agrandissement de la photographie de la figure 6. L'échelle représentée sur la figure 7 est de 20 µm ;
- la figure 8 est une vue au microscope électronique du support métallique poreux de l'exemple 4. L'échelle représentée sur la figure 8 est de 1 mm ;
- la figure 9 est une vue au microscope électronique du support métallique poreux de l'exemple 4. L'échelle représentée sur la figure 9 est de 200 µm ;
- la figure 10 est une vue au microscope électronique du support métallique poreux de l'exemple 5. L'échelle représentée sur la figure 10 est de 1 mm ;
- la figure 11 est une vue au microscope électronique du support métallique poreux de l'exemple 5. L'échelle représentée sur la figure 11 est de 100 µm ;
- la figure 12 présente des photographies qui montrent un support métallique poreux non préoxydé (à gauche) et préoxydé à 900°C pendant 10 minutes sous air (à droite) ;
- la figure 13 présente des photographies qui montrent un échantillon d'un support métallique poreux non préoxydé ayant ensuite subi une oxydation à 800°C sous air pendant 70 heures (à gauche) et un échantillon d'un support métallique poreux préoxydé ayant ensuite subi une oxydation à 800°C sous air pendant 70 heures (à droite) ;
- la figure 14 est un graphique qui montre la prise de masse pour des échantillons de supports métalliques poreux préoxydés (échantillon 366, points ■ ; et échantillon 367, points •) lors d'une oxydation sous air à 900°C pendant 10 minutes ; et pour un échantillon comparatif non préoxydé (échantillon 364, points ◆).

En ordonnée est portée la prise de masse Dm/m (%) et en abscisse est portée la durée de l'oxydation (en heures).

### EXPOSÉ DÉTAILLÉ DE MODES DE RÉALISATION PARTICULIERS

La description détaillée qui suit est plutôt faite, par commodité en référence au procédé selon invention.

Précisons tout d'abord que le terme poreux tel qu'il est utilisé dans la présente en relation avec un matériau tel qu'un métal ou un alliage métallique, signifie que ce matériau contient des pores ou vides.

En conséquence, la densité de ce matériau poreux est inférieure à la densité théorique du matériau non poreux.

Les pores peuvent être reliés ou isolés mais dans le substrat métallique poreux selon l'invention la majorité des pores sont reliés, en communication. On parle alors de porosité ouverte.

Au sens de l'invention, un support est généralement considéré comme poreux lorsque sa densité est au plus d'environ 95% de sa densité théorique.

En outre, dans la présente on emploie indifféremment les termes substrat et support, le terme support se rapportant plutôt au substrat poreux intégré ou allant être intégré dans un EHT ou une SOFC.

Dans la première étape du procédé selon l'invention, on introduit dans un moule ayant la forme du substrat au moins deux couches successives de poudres métalliques ayant des granulométries décroissantes, respectivement croissantes.

Le procédé selon l'invention permet la préparation de substrats de toutes tailles et de toutes formes même complexes. Ainsi le substrat peut avoir, une section principale en forme de polygone, par exemple une section carrée ou rectangulaire ou bien une section circulaire.

Le substrat est généralement un substrat plan, planaire c'est-à-dire que les première et seconde surfaces mentionnées ci-dessus sont généralement planes, de préférence horizontales et parallèles et ont par exemple une des formes citées ci-dessus : polygone, rectangle, carré ou cercle, et que, en outre, l'épaisseur du substrat est faible par rapport aux dimensions desdites première et seconde surfaces.

Il est important de noter que la technique de pressage-frittage mise en oeuvre selon l'invention n'a pas été appliquée à la préparation de substrats plans dans l'art antérieur.

Le substrat peut notamment avoir la forme d'un disque, par exemple d'une épaisseur de 100 µm à 5 mm et d'un diamètre de 20 mm à 500 mm ou la forme d'un parallélépipède rectangle ou encore la forme d'un substrat à section carrée.

Le substrat peut être un substrat de grande taille, à savoir par exemple de 50 mm à 300 mm de diamètre ou de côté, ou un substrat de petite taille par exemple de 10 mm à 50 mm.

Le moule a une forme et une taille adaptées à la forme et à la taille du substrat que l'on souhaite préparer.

Le moule est généralement en un matériau métallique.

Les poudres métalliques introduites dans le moule peuvent être choisies parmi les poudres de métaux et d'alliages métalliques suivants : fer, alliages à base de fer, chrome, alliages à base de chrome, alliages fer-chrome, aciers inoxydables, nickel, alliages à base de nickel, alliages nickel-chrome, alliages contenant du cobalt, alliages contenant du manganèse, alliages contenant de l'aluminium.

Les poudres utilisées dans le procédé selon l'invention peuvent être des poudres du commerce ou bien elles peuvent être préparées par broyage ou atomisation de morceaux massifs de métaux ou d'alliages.

Les poudres de métaux ou d'alliages utilisées dans le procédé selon l'invention ont généralement une granulométrie de 1 µm à 500 µm, de préférence de 1 µm à 100 µm.

Afin d'obtenir le gradient de porosité du support métallique poreux selon l'invention, on dépose successivement dans le moule au moins deux couches de poudre, qui présentent des granulométries croissantes, respectivement décroissantes.

En effet plus la granulométrie de la poudre est importante plus la porosité du matériau pressé puis fritté issu de cette poudre sera élevée.

Ainsi, on pourra commencer par déposer dans le moule une première couche ou inférieure constituée par une poudre de forte granulométrie, à savoir par exemple de 50 µm à 500 µm, destinée à former dans le support métallique poreux final, et après compression/pressage puis frittage, une couche inférieure de forte porosité, à savoir d'une porosité généralement de 25% à 65%, avantageusement de 30% à 60%. Dans le support métallique poreux final, cette couche inférieure de forte porosité permet de faciliter l'acheminement des gaz à travers le poreux.

L'épaisseur de cette couche inférieure constituée par une poudre de forte granulométrie est telle qu'elle donne dans le poreux final une couche de forte porosité d'une épaisseur généralement de 100 µm à 5 mm.

Au-dessus de cette couche inférieure constituée par une poudre de forte granulométrie on dépose une couche constituée par une poudre de faible granulométrie à savoir par exemple de 1 µm à 50 µm, destinée à former dans le support métallique poreux final, et après compression et frittage une couche supérieure de faible porosité, à savoir d'une porosité généralement de 10% à 40%, avantageusement de 10% à 30%. Dans le support métallique poreux final, cette couche supérieure de faible porosité permet de faciliter l'accrochage des couches céramiques constituant les électrodes.

L'épaisseur de cette couche supérieure constituée par une poudre de faible granulométrie est telle qu'elle donne dans le poreux final une couche de faible porosité d'une épaisseur généralement inférieure à 500 µm, et de préférence inférieure à 100 µm.

Au lieu de déposer d'abord une couche inférieure constituée par une poudre de forte granulométrie puis une couche supérieure constituée par une poudre de faible granulométrie, on peut bien sûr, à l'inverse, commencer par déposer la couche constituée par une poudre de granulométrie faible puis déposer la couche constituée par une poudre de granulométrie élevée.

Une ou plusieurs couche(s) intermédiaire(s) constituée(s) par des poudres présentant une granulométrie intermédiaire entre la granulométrie de la poudre constituant la couche inférieure, respectivement supérieure de forte granulométrie, et la granulométrie de la poudre constituant la couche supérieure, respectivement inférieure de faible granulométrie peut (peuvent) être déposée(s) entre la couche inférieure et la couche supérieure.

Ces couches intermédiaires peuvent être au nombre de 1 à 8, par exemple de 1 à 5, notamment 2, 3 ou 4. La granulométrie des poudres qui constituent ces couches intermédiaires est avantageusement choisie pour assurer une évolution de la porosité plus continue dans le support métallique poreux final. En d'autres termes, ces couches intermédiaires sont constituées par des poudres dont la granulométrie décroît depuis la couche la plus proche de la couche constituée par une poudre de forte granulométrie jusqu'à la couche la plus proche de la couche constituée par une poudre de faible granulométrie.

Ainsi, on pourra prévoir 4 couches intermédiaires constituées par des poudres ayant respectivement une granulométrie de 300 à 400, 200 à 300, 100 à 200, 50 à 100 µm entre une couche de forte granulométrie ayant généralement une granulométrie de 400 à 500 µm et une couche de faible granulométrie ayant généralement une granulométrie de 1 à 50 µm.

La porosité et l'épaisseur exacte des couches dans le support métallique poreux final sont définies par la granulométrie des poudres ainsi que par la force appliquée lors de l'étape de pressage décrite plus bas.

En outre, toutes les couches de poudres y compris les couches intermédiaires éventuelles peuvent être constituées par un même alliage ou métal ou bien une ou plusieurs couches de poudres peuvent être constituées par un métal ou alliage différent des autres couches.

Par exemple, la couche constituée par une poudre de faible granulométrie qui donnera dans le support poreux final la couche de faible porosité, qui est généralement la couche supérieure ou superficielle, peut être en un métal différent de la ou des autres couches et notamment de la couche inférieure constituée par une poudre de forte granulométrie.

Le métal ou l'alliage de la couche supérieure peut ainsi être choisi de façon à être différent des métaux ou alliages des autres couches pour une ou plusieurs parmi les raisons suivantes :
- afin de présenter une meilleure tenue à l'oxydation, pour éviter de développer une couche d'oxyde trop épaisse qui nuirait au fonctionnement de la cellule. En effet, il se pose alors un problème de collectage du courant en présence d'une couche d'oxyde, en outre, un empoisonnement de l'électrode dans le cas de la configuration électrode à air sur support métallique peut avoir lieu. Tous les métaux et alliages précédemment cités, à savoir le chrome, les alliages à base de chrome, les alliages Fer-chrome, les aciers inoxydables, le nickel, les alliages à base de nickel, les alliages nickel-chrome remplissent ces conditions ;
- afin de minimiser la réactivité chimique avec le matériau d'électrode tel qu'un oxyde ou un cermet, qui pénaliserait également le fonctionnement de la cellule. Tous les métaux et alliages précédemment cités remplissent ce rôle.
- afin de jouer le rôle de couche d'accommodation en termes de coefficient de dilatation thermique entre la sous-couche inférieure du support poreux et les couches céramiques. Les alliages Fe/Cr et l'acier inoxydable remplissent ce rôle.

Une fois que les couches de poudres ont été disposées dans le moule, on procède ensuite à une étape de mise en forme de ces poudres par pressage, compression. Préalablement au pressage, il est éventuellement possible d'incorporer un liant, tel qu'un liant organique de type PVA, par exemple en utilisant une barbotine présentant une teneur de 1 à 20%, de préférence de 5% en poids de liant. L'incorporation de ce liant permet d'obtenir une tenue mécanique suffisante des pièces pressées à cru.

On dépose, en les versant tout simplement dans le moule les différentes couches, et le pressage et le frittage sont généralement réalisés, d'un seul tenant, sur l'ensemble des couches. Il est aussi possible de réaliser le pressage et le frittage couche par couche.

De préférence, ce pressage, cette compression, est réalisé(e) à l'aide d'une presse uniaxiale.

Lors du pressage, on applique généralement une pression comprise entre 10 et 700 MPa, de préférence de 100 MPa pour obtenir ainsi une porosité de 70% à 20%, et de préférence de 40% à 60% à cru.

A l'issue de l'étape de mise en forme par pressage, compression, on obtient un support métallique poreux « cru », « green » avec une porosité globale, moyenne de 70% à 20%, de préférence de 40% à 60%. On sépare alors le substrat, support métallique poreux « cru » du moule.

L'étape suivante du procédé selon l'invention consiste à fritter ce support métallique poreux « cru », « green ».

Le frittage de ce support métallique poreux « cru » s'effectue préférentiellement sous une atmosphère contrôlée, à savoir une atmosphère généralement définie par une pression partielle d'oxygène très faible, par exemple inférieure à 10⁻²⁰ atm, afin de limiter l'oxydation de ce poreux. Cette atmosphère est généralement constituée par de l'argon ou de l'azote en présence d'un réducteur tel que l'hydrogène, ou bien par de l'hydrogène pur.

Le frittage est généralement réalisé à une température comprise entre la température minimum de début de frittage et la température de densification totale du matériau constituant le support poreux « cru ». Cette température est généralement de 600°C à 1600°C et elle est plus précisément de 800°C à 1400°C, notamment pour l'acier 1.4509.

De préférence, la température de frittage correspond à 85% de la température de densification totale du matériau, à savoir par exemple 1200°C.

La température de frittage peut être maintenue (palier de frittage) pendant une durée de 0 à 8 heures, par exemple de 3 heures.

Le choix de la température de densification-frittage ainsi que la durée du palier de frittage sera conditionné par la porosité finale moyenne, globale, souhaitée du matériau et de préférence on choisira une température de frittage de 1200°C que l'on maintiendra pendant une durée de 3 heures.

On a vu que l'on préfère presser et fritter toutes les couches d'un seul tenant mais lorsque chaque couche est constituée par un matériau différent et/ou a une granulométrie différente, chacune de ces couches présente également des températures et/ou durées de frittage et/ou paliers de frittage différents. L'homme du métier pourra alors facilement déterminer les températures, durées, et paliers de frittage pour l'ensemble des couches au moyen de quelques essais préalables.

A l'issue du frittage, on réalise une oxydation partielle, contrôlée du substrat poreux en le mettant en contact avec un gaz oxydant tel que l'air et/ou l'oxygène. Cette oxydation partielle peut consister à purger les gaz qui constituaient l'atmosphère utilisée lors du frittage puis à remettre le substrat sous une atmosphère oxydante, par exemple d'air et/ou d'oxygène à pression ambiante à haute température, de préférence la même température que celle utilisée pour le frittage, par exemple de 1200°C, ou à une température inférieure à la température de frittage (par exemple de 800°C ou 900°C) pendant quelques minutes seulement, par exemple pendant 1 à 20 minutes, de préférence pendant 1 à 10 minutes.

Plus précisément, si le substrat est initialement à une température inférieure à celle du traitement d'oxydation partielle préalable ou préoxydation (par exemple à la température ambiante), on peut effectuer tout d'abord une montée en température depuis cette température jusqu'à la température du traitement de préoxydation, généralement sous une atmosphère neutre ou légèrement réductrice, par exemple une atmosphère d'argon ou une atmosphère d'argon additionnée d'hydrogène, par exemple de 2% d'hydrogène. Cette montée en température peut se faire par exemple à raison de 300°C/heure. Une fois que l'on a atteint la température de préoxydation qui est généralement de 600°C à 1200°C, par exemple de 900°C, on réalise un balayage du four par un gaz neutre, par exemple un balayage à l'azote pendant une durée de 1 à 20 minutes, de préférence de 1 à 10 minutes, par exemple de 10 minutes, puis on introduit le gaz pour la préoxydation tel que de l'air et/ou de l'oxygène.

La préoxydation est, comme on l'a vu, réalisée généralement à une température de 600°C à 1600°C, de préférence de 800 à 1200°C, par exemple de 900°C, pendant une durée de 1 à 20 minutes, de préférence de 1 à 10 minutes. On ramène ensuite le substrat à la température ambiante, en le refroidissant par exemple sous une atmosphère de gaz neutre tel que de l'azote à raison par exemple de 300°C/heure.

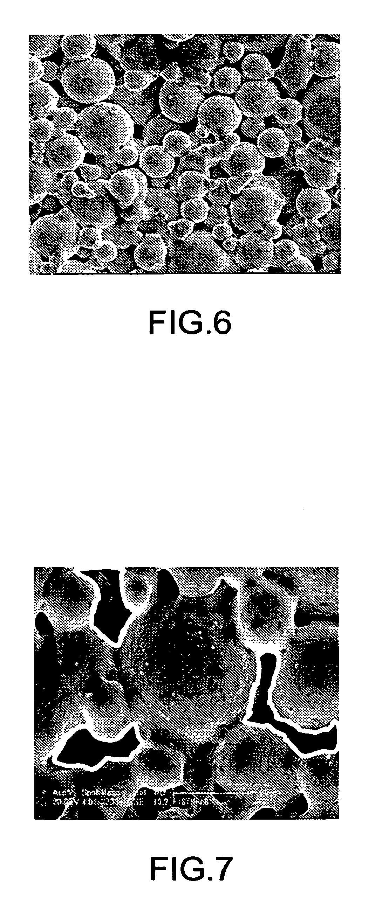

La préoxydation est une oxydation partielle, contrôlée, c'est-à-dire qu'elle est généralement contrôlée en terme de durée et donc d'épaisseur d'oxyde qui assurera la fonction de protection contre une oxydation ultérieure (notamment lors du fonctionnement de la cellule) qui serait plus rapide sans cette couche de protection. Cette oxydation partielle conduit à la formation d'une couche que l'on peut qualifier de couche de « préoxydation » sur les grains du substrat poreux et notamment sur les grains de petite taille et de faible granulométrie, qui constituent généralement la couche supérieure, moins poreuse, du substrat métallique poreux selon l'invention (voir figures 6 et 7).

Par « oxydation partielle », on entend que tous les grains de toute l'épaisseur du poreux sont oxydés (et c'est ce que l'on cherche) à l'exception éventuellement des grains se trouvant dans des zones où le gaz oxydant ne pourrait pas accéder, mais que chacun de ces grains n'est pas totalement oxydé, et n'est oxydé qu'en partie, et généralement sur une certaine épaisseur. Cette épaisseur oxydée est difficile à mesurer car elle est généralement très fine et généralement largement inférieure au µm.

En d'autres termes, par « oxydation partielle », on entend qu'on a une oxydation contrôlée de chaque grain du substrat poreux, mais que l'ensemble du substrat poreux est cependant affecté par cette oxydation et que l'oxydation ne concerne pas qu'une partie limitée du substrat poreux. Autrement dit, tous les grains, particules du substrat poreux sont oxydés mais chacun l'est de manière partielle, contrôlée.

L'oxydation est contrôlée en ce sens que les conditions de cette oxydation et notamment sa durée et la température à laquelle elle est réalisée sont choisies de telle sorte que chacun des grains, particules soit oxydé partiellement, généralement sur une épaisseur définie, limitée, et non totalement.

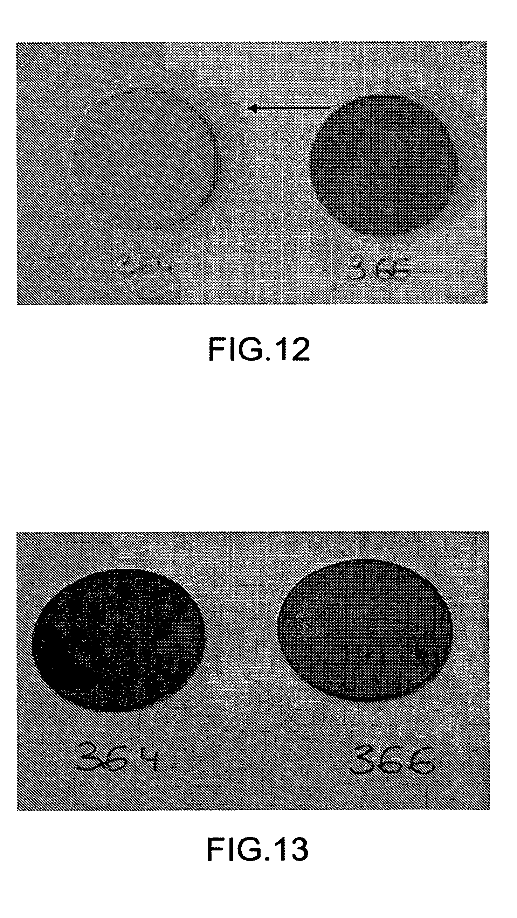

On obtient grâce à cette oxydation partielle, contrôlée, une meilleure tenue à l'oxydation par les gaz en cours d'utilisation et une meilleure accroche de la couche de faible porosité, sur les matériaux céramiques constituant l'agencement anode / électrolyte / cathode (voir l'exemple 7 et les figures 12 à 14).

A l'issue du frittage et de l'oxydation partielle, on effectue comme décrit plus haut une descente en température depuis la température d'oxydation partielle jusqu'à la température ambiante et on récupère le substrat ou support poreux.

Les substrats ou supports poreux ainsi réalisés ont une porosité moyenne, globale, généralement comprise entre 10% et 70% préférentiellement 20% à 40%.

Les supports ou substrats poreux réalisés auront par exemple une épaisseur de 200 µm à 5 mm entre deux surfaces planes parallèles, par exemple de 4 cm² à 900 cm².

Ces supports métalliques poreux sont ensuite utilisés pour fabriquer des cellules à métal support telles que celles représentées sur la figure 3A ou sur la figure 3B.

Le matériau de l'électrode à hydrogène ou à eau est choisi parmi les matériaux connus de l'homme du métier pour ce type d'électrode, il pourra s'agir par exemple de Cermet, NiYSZ, ou de céramique de type oxyde.

Le matériau de l'électrode à oxygène est choisi parmi les matériaux connus de l'homme du métier pour ce type d'électrode, il pourra s'agir par exemple de perovskite simple ou multiple.

Le matériau de l'électrolyte est choisi parmi les matériaux connus de l'homme du métier pour ce type d'électrode, il pourra s'agir par exemple de zircone ytrriée.

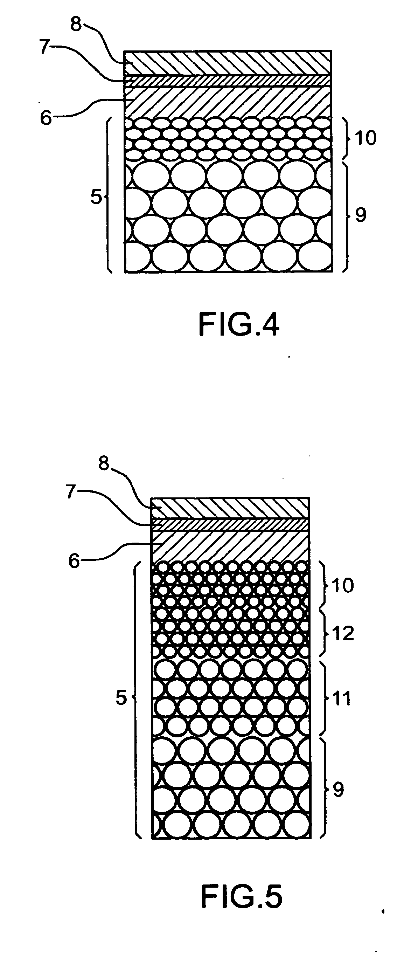

Sur les figures 4 et 5, on a représenté de manière schématique un électrolyseur à haute température « EHT » ou une pile à combustible de « SOFC » comprenant un support métallique poreux bicouche (5) à gradient de porosité selon l'invention sur lequel sont déposés à l'instar des figures 3A et 3B une première électrode (6) (à hydrogène ou eau ou bien à oxygène), un électrolyte (7) et une seconde électrode (8) (à oxygène, ou bien à hydrogène ou eau selon la nature de la première électrode).

Le support métallique comprend une couche inférieure très poreuse (9), par exemple avec une porosité de 25% à 65%, avantageusement de 30% à 60%, et avec des gros pores par exemple d'un diamètre de plus de 20 µm à 50 µm, et une couche supérieure moins poreuse (10), par exemple avec une porosité de 10% à 40%, avantageusement de 10% à 30%, et avec des petits pores par exemple d'un diamètre de 1 µm à 20 µm.

Il y a lieu également de noter, de manière générale, que la couche inférieure de forte porosité (9), très poreuse est constituée par des particules frittées de granulométrie élevée à savoir de 50 µm à 500 µm, tandis que la couche supérieure de faible porosité, moins poreuse (10) est constituée par des particules frittées de faible granulométrie à savoir de 1 à 50 µm. La granulométrie des particules, la porosité, et la taille des pores sont généralement liées et varient dans le même sens.

La couche supérieure moins poreuse (10) peut être en un matériau tel que le chrome, les alliages à base de chrome, les alliages Fer-chrome, les aciers inoxydables, le nickel, les alliages à base de nickel, les alliages nickel-chrome, identique ou différent du matériau de la couche inférieure par exemple en un matériau tel que le chrome, les alliages à base de chrome, les alliages Fer-chrome, les aciers inoxydables, le nickel, les alliages à base de nickel, les alliages nickel-chrome.

Comme on l'a déjà précisé plus haut, le matériau de la couche supérieure peut être choisi pour limiter l'oxydation en surface et/ou la réactivité chimique avec le matériau d'électrode, et/ou accommoder les coefficients d'expansion thermique (CET) des 2 matériaux en regard.

Les petits pores de la couche supérieure et sa surface supérieure plus lisse favorisent l'accrochage des couches. Les gros pores de la couche inférieure très poreuse favorisent l'acheminement des gaz.

Sur la figure 5, on a représenté de manière schématique un électrolyseur à haute température « EHT » ou une pile à combustible de « SOFC » comprenant un support métallique poreux à gradient de porosité selon l'invention sur lequel sont déposés à l'instar des figures 3A et 3B une première électrode (6) (à hydrogène ou eau ou bien à oxygène), un électrolyte (7) et une seconde électrode (8) (à oxygène, ou bien à hydrogène ou eau selon la nature de la première électrode).

Le support métallique (5) comprend de même que le support de la figure 4 une couche inférieure très poreuse (9), par exemple avec une porosité de 25% à 65%, avantageusement de 30% à 60%, et avec des gros pores par exemple d'un diamètre de plus de 20 µm à 50 µm, et une couche supérieure moins poreuse (10), par exemple avec une porosité de 10% à 40%, avantageusement de 10% à 30%, et avec des petits pores par exemple d'un diamètre de 1 µm à 20 µm. Entre les couches supérieure (10) et inférieure (9) sont intercalées plusieurs couches intermédiaires (11, 12) présentant des porosités décroissantes depuis le bas vers le haut. Sur la figure 5, 2 couches intermédiaires (11, 12) ont été représentées mais il est bien évident qu'une seule couche intermédiaire ou bien jusqu'à 8 couches intermédiaires peuvent être prévues.

Les couches intermédiaires (11, 12) permettent d'avoir une évolution de la porosité plus continue, favorisant notamment la circulation des gaz de façon plus homogène.

Par exemple sur la figure 5, les 2 couches intermédiaires (11, 12) peuvent avoir respectivement une porosité de 40% à 30% et de 30% à 20% et un diamètre de pores de 35 µm à 50 µm et de 20 µm à 35 µm.

Comme pour le support de la figure 4, la couche supérieure moins poreuse (10) peut être en un matériau tel qu'un alliage Fe/Cr identique ou différent du matériau de la couche inférieure (9) plus poreuse par exemple en alliage base Ni et du matériau des couches intermédiaires (11, 12) de porosités intermédiaires.

Sur les figures 6 et 7, le support métallique poreux de l'« EHT » ou de la « SOFC » est un support métallique poreux préoxydé qui a été soumis à une oxydation partielle par un gaz oxydant. Sur la figure 7 qui est un agrandissement de la photographie du support de la figure 6, on distingue nettement la couche de préoxydation sur quelques grains du support.

Les figures 4, 5, 6 et 7 montrent que des substrats à gradient de porosité, et préoxydés peuvent être utilisés lors de la fabrication de cellules « SOFC » ou « EHT », conformément aux connaissances générales de l'homme du métier.

L''invention va maintenant être décrite en référence aux exemples suivants, donnés à titre illustratif et non limitatif.

### Exemple 1 :

On prépare 60 supports métalliques poreux de 1,6 mm d'épaisseur et d'un diamètre de 25 mm par pressage d'une poudre d'alliage 1.4509 tamisée à 50-100 µm puis frittage.

Le frittage est effectué à 1200°C pendant 3 heures sous atmosphère contrôlée (Ar+2% d'H₂) de la façon suivante :
Montée en température à raison de 200°C/heure jusqu'à 500°C, puis palier de 1 heure à 500°C pour favoriser le déliantage, puis nouvelle montée en température à raison de 300°C par heure jusqu'à 1200°C, puis nouveau palier de 3 heures à 1200°C, et descente en température à raison de 300°C par heure jusqu'à la température ambiante.

La porosité obtenue après frittage (mesurée par densité volumique et picnométrie) est de 27% à 30%.

### Exemple 2 :

On prépare 30 supports métalliques poreux de 3 mm d'épaisseur et d'un diamètre de 25 mm par pressage-frittage d'une poudre d'alliage 1.4509. La poudre est la même poudre que celle de l'exemple 1, obtenue par atomisation. La porosité après frittage est de 27%.

### Exemple 3 :

On prépare un support métallique poreux de 1,6 mm d'épaisseur et d'un diamètre de 25 mm par pressage-frittage avec la même poudre d'alliage que celle des exemples 1 et 2.

Le support présente un gradient de porosité avec une sous-couche inférieure, d'une épaisseur de 1 mm, et une sous-couche supérieure d'une épaisseur de 0,6 mm.

La sous-couche inférieure a une porosité de 30% à 40%, une granulométrie de 100 µm à 200 µm, et une taille de pores de 30 µm à 40 µm

La sous-couche supérieure a une porosité de 20% à 30%, une granulométrie de 10 µm à 50 µm, et une taille de pores de 5 µm à 10 µm.

Les deux sous-couches sont cofrittées selon le protocole décrit dans l'exemple 1.

On obtient une perméation de couche de 4,3.10⁻¹⁴ m².

### Exemple 4 :

Dans cet exemple, on prépare un support métallique poreux avec un gradient de porosité.

Ce poreux a un diamètre 25 mm et est réalisé à partir de poudre d'alliage 1.4509.

La couche supérieure a une épaisseur d'environ 200 µm et est constituée d'une poudre de granulométrie inférieure à 50 µm

La couche inférieure, d'une épaisseur d'environ 1,2 mm, est constituée d'une poudre de granulométrie de 200 à 350 µm.

Ce poreux est réalisé par un procédé comprenant les étapes successives suivantes :

### - Préparation d'une Barbotine :

Chacune des poudres est mise en barbotine selon les conditions générales définies plus haut, avec 2% de PVA et de l" eau, à 80°C. Plus précisément, on dissout le PVA (2g) dans de l'eau (20mL) à 80°C à l'aide d'un agitateur magnétique. Puis on incorpore la poudre au mélange (100g). Ainsi, on obtient une barbotine. Lorsque l'eau s'est évaporée de la barbotine, on obtient une pâte sèche que l'on fait passer à travers un tamis (de 350 µm).

### - Pressage :

On incorpore dans un premier temps la poudre qui sera en contact direct avec l'électrode dans la matrice de la presse, ici la poudre dont la granulométrie est la plus petite (poudre de granulométrie inférieure à 50 µm) puis on incorpore la seconde poudre d'une granulométrie de 200-350 µm. Le poreux est ensuite pressé à 300 MPa.

### - Frittage :

On utilise un four tubulaire de marque AET horizontal sous atmosphère contrôlée afin de réaliser le frittage de ce poreux dans une atmosphère d'argon à 2% d'hydrogène, et selon le cycle thermique suivant :
- Rampe 1 : de 25°C à 500°C à raison de 200°C/h ;
- Rampe 2 : de 500°C à 1200°C à raison de 300°C/h ;
- Palier de 2h à 1200°C :
- Rampe 3 : de 1200°C à 25°C à raison de 300°C/h.

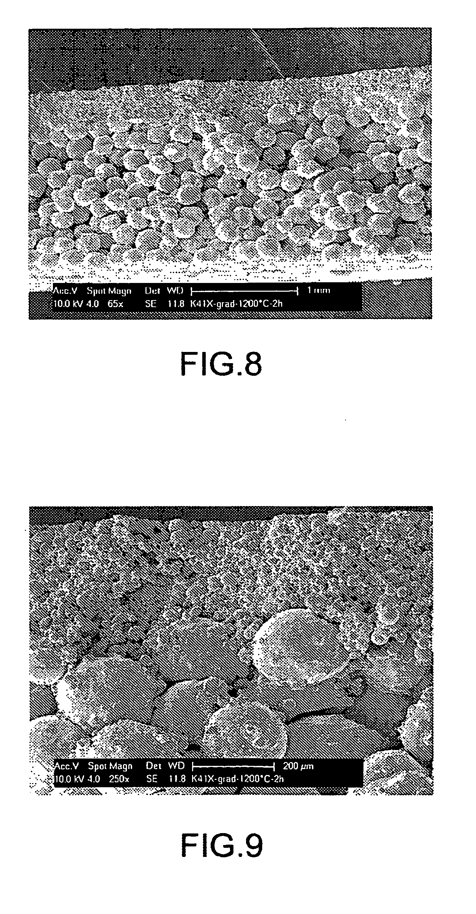

Les Figures 8 et 9 montrent la nanostructure, à savoir la taille de grains et de pores des deux couches du poreux à gradient de porosité.

La figure 8 est une vue générale et la figure 9 est une vue de détail.

### Exemple 5 :

Dans cet exemple, on prépare un support métallique poreux bi-matériau.

Ce poreux a un diamètre de 25 mm et est réalisé à partir de 2 matériaux ayant des compositions chimiques différentes :
- la couche supérieure d'une épaisseur d'environ 150-200 µm est constituée d'une poudre de nickel de granulométrie 25-60 µm ;
- la couche inférieure, d'une épaisseur d'environ 1,2 mm est constituée d'une poudre d'alliage 1.4509 de granulométrie 200-350 µm.

Ce poreux est réalisé par un procédé comprenant les étapes successives suivantes :

### - Préparation d'une Barbotine :

Chacune des poudres est mise en barbotine selon les conditions générales définies plus haut, avec 2% de PVA et de l'eau, à 80°C. Plus précisément, on dissout le PVA (2g) dans de l'eau (20mL) à 80°C à l'aide d'un agitateur magnétique. Puis on incorpore la poudre au mélange (100g). Ainsi, on obtient une barbotine. Lorsque l'eau s'est évaporée de la barbotine, on obtient une pâte sèche que l'on fait passer à travers un tamis (de 350 µm).

### - Pressage :

On incorpore dans un premier temps la poudre qui sera en contact direct avec l'électrode dans la matrice de la presse, ici la poudre dont la granulométrie est la plus petite (poudre de granulométrie inférieure à 50 µm) puis on incorpore la seconde poudre d'une granulométrie de 200-350 µm. Le poreux est ensuite pressé à 300 MPa.

### - Frittage :

On utilise un four tubulaire AET horizontal sous atmosphère contrôlée afin de réaliser le frittage de ce poreux dans une atmosphère d'argon à 2% d'hydrogène, et selon le cycle thermique suivant :
- Rampe 1 : de 25°C à 500°C à raison de 200°C/h ;
- Rampe 2 : de 500°C à 1200°C à raison de 300°C/h ;
- Palier de 2h à 1200°C ;
- Rampe 3 : de 1200°C à 25°C à raison de 300°C/h.

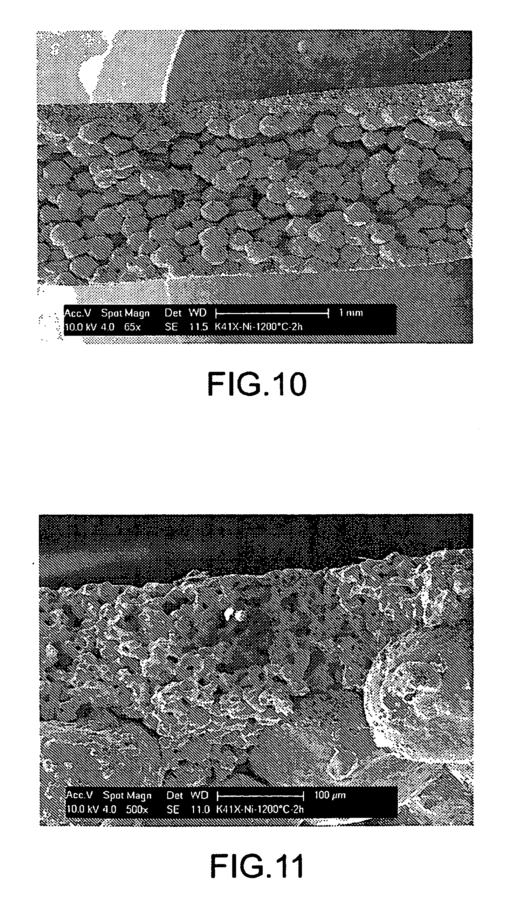

Les Figures 10 et 11 montrent la nanostructure, à savoir la taille de grains et de pores des deux couches du poreux bi-matériau.

La figure 10 est une vue générale et la figure 11 est une vue de détail.

### Exemple 6 :

Dans cet exemple, on réalise une cellule complète.

Sur un poreux métallique tel que décrit dans l'exemple 1, une 1^{ère} électrode, l'électrode à hydrogène est déposée par sérigraphie.

Elle a une composition NiO-YSZ, avec 45% massique de NiO (oxyde de nickel) et 55% massique de YSZ (zircone stabilisée avec 8% molaire d'oxyde d'yttrium). L'épaisseur de cette couche est de 50 µm environ et sa porosité est d'environ 30%.

Un électrolyte en zircone stabilisée à l'oxyde de scandium (ScSZ) et d'épaisseur 10 µm est ensuite déposé par sérigraphie.

Enfin, une électrode à oxygène de composition LSCF (cobalto-ferrite de lanthane dopée strontium), d'épaisseur 40 µm et de porosité 40% est déposée par sérigraphie, avec ajout d'une couche interfaciale CGO (cérine gadoliniée) d'une épaisseur d'environ 2 µm à l'interface électrolyte-électrode.

Deux étapes de frittage sont utilisées pour réaliser la cellule complète selon des techniques courantes.

### Exemple 7:

Dans cet exemple, on réalise la préoxydation d'un support métallique poreux et on évalue sa tenue à l'oxydation ultérieure.

Deux poreux de diamètre 25 mm, et d'épaisseur 1,57 mm, constitués de poudre d'alliage 1.4509 de granulométrie comprise entre 50 µm et 100 µm et d'une porosité de 33 %, ont été soumis à un traitement de préoxydation à 900°C pendant 10 minutes sous air.

La montée en température a été effectuée sous une atmosphère Jargon+2% hydrogène à une vitesse de 300 °C/heure.

A 900°C, un balayage du four à l'azote pendant 10 minutes a été réalisé avant d'introduire l'air pour la préoxydation. La préoxydation à 900°C sous air a duré 10 minutes, puis les échantillons ont été refroidis sous azote, la rampe de descente en température étant de 300°C/heure.

Après le traitement, les deux échantillons (366 et 367 de même composition) apparaissent irisés (témoignant d'une légère oxydation) et ils présentent une prise de masse Dm/m de 0,34 et de 0,44 % (valeurs pour les deux échantillons testés 366 et 367 respectivement).

Les photos de la Figure 12 présentent l'aspect visuel d'un échantillon non préoxydé (364 à gauche) et d'un échantillon préoxydé à 900°C pendant 10 minutes (366 à droite). On observe visuellement que l'échantillon 366 a une couleur beaucoup plus sombre, due à la préoxydation.

L'échantillon est oxydé dans tout le volume, tous les grains sont affectés mais sur une épaisseur autour de chaque grain difficilement évaluable, mais très inférieure au micron.

Les échantillons ont ensuite été oxydés à 800°C sous air pendant 70 h. La montée en température a été effectuée sous azote à une vitesse de 300 °C/h. A 800°C, l'oxydation a été réalisée sous air pendant 70 heures. Puis les échantillons ont été refroidis sous azote, la rampe de descente en température étant de 300°C/h.

Après cette oxydation, les deux échantillons présentent un gain de masse Dm/m de 1,07 et 1,52 % respectivement. Pour comparaison, un échantillon similaire non préoxydé 364 et soumis au même traitement d'oxydation présente un gain de masse Dm/m de 2,58 %, ce qui est entre 1,7 et 2,4 fois supérieur.

Les photos de la Figure 13 présentent l'aspect visuel après oxydation à 800°C pendant 70 h d'un échantillon non préoxydé (364 à gauche) et d'un échantillon préoxydé à 900°C pendant 10 min (366 à droite). On observe visuellement que l'échantillon 366 a une couleur moins sombre, témoignant d'une oxydation moins importante, en accord avec les prises de masse reportées ci-dessus.

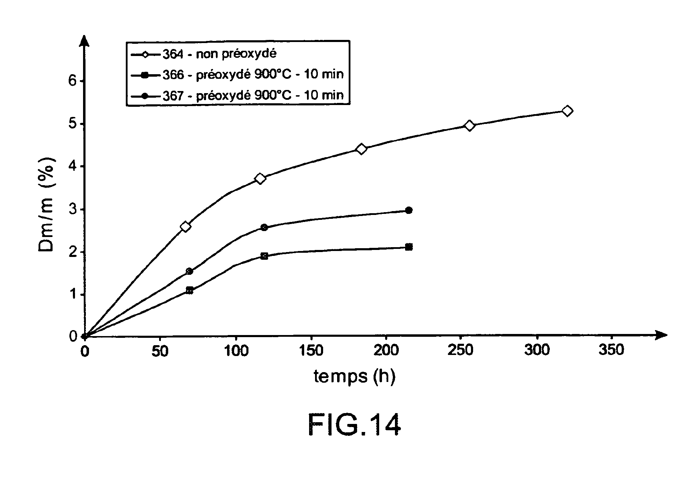

La courbe de la Figure 14 présente le gain de masse des échantillons pré-oxydés lors de ce traitement d'oxydation à 800°C (366 et 367). Pour comparaison, le gain de masse d'un échantillon identique non préoxydé (364) est indiqué.

Les résultats sont confirmés pour des durées plus longues allant jusqu'à 220 heures.

Les courbes de la figure 14 démontrent que le gain de masse des échantillons qui ont subi une préoxydation préalable est nettement moins important que le gain de masse de l'échantillon qui n'a pas subi cette préoxydation préalable.

Les échantillons ayant subi une préoxydation préalable sont donc beaucoup plus résistants à l'oxydation à haute température et pendant une longue durée que les échantillons qui n'ont pas subi le traitement de préoxydation.

### RÉFÉRENCES

[1] N. CHRISTIANSEN et al., "Solid Oxide Fuel CelI Research and Development at Topsoe Fuel CelI AIS and Risø/DTU", 8th European Fuel Cell Forum 2008, Lucerne, Suisse, 30 juin au 4 juillet 2008, article B0201.
[2] P. SZABO et al., "Measurement of High Temperature Leak Rates on Vacuum-Plasma-Sprayed SOFC electrolytes", 7th European SOFC forum, Lucerne, Suisse, 3 au 7 juillet 2006, article P0419.
[3] P. SZABO et al., "Status and Progress in Development of Metal Supported Light-Weight SOFC for Mobile Applications", 8th European Fuel Cell Forum 2008, Lucerne, Suisse, 30 juin au 4 juillet 2008, article B0603.
[4] S. VISCO et al., "LBNL Activity Overview", SECA Workshop, 20 février 2003.
[5] US-A1-2003/0175439, *"Process for making dense thin films".*
[6] US-B1-6, 605, 316, *"Structures and fabrication techniques for solid state electrochemical devices".*
[7] US-B2-7,163,713, *"Method for making dense crack free thin films".*
[8] M. TUCKER et al., "Performance of metal-supported SOFCs with infiltrated electrodes", J. Power Sources 171 (2007) 477-482.
[9] GB-A-2386126A, *"Impermeable sintered ceramic electrolyte layer for solid oxide fuel cell".*
[10] Ceres Power Ltd, "Development of innovative metal supported IT-SOFC technology", DTI report F/01/00277/REP (2005).
[11] GB-A-2400723, *"Solid oxide fuel cell for novel substrate and a method for fabricating the same ".*
[12] I. VILLAREAL et al., "Metallic Support SOFC Cell Development in Ikerlan", 8th European Fuel Cell Forum 2008, Lucerne, Suisse, 30 juin au 4 juillet 2008, article B0607.
[13] R. HUI et al., "High Performance Metal-supported SOFCs", 8th European Fuel Cell Forum 2008, Lucerne, Suisse, 30 juin au 4 juillet 2008, article B0604.
[14] WO-A2-2004/012287, *"Metal-supported tubular fuel cell ".*
[15] US-A1-2006/0251947, *"Bipolar plate supported solid oxide fuel cell with a sealed anode compartment".*
[16] EP-A1-1353394, *"Thin film solid oxide fuel cell (SOFC) and its method of production".*
[17] WO-A2-2006/082057, "*A method for producing a reversible solid oxid fuel cell"*
[18] S. MOLINS et al., "Evaluation of porous 430L stainless steel for SOFC operation at intermediate temperatures". Journal of Power sources 181 (2008) 31-37.

## Revendications

1. Substrat partiellement oxydé, obtenu en soumettant un substrat en métal ou alliage métallique poreux comprenant des particules d'au moins un métal ou alliage métallique liées par frittage, ledit substrat comprenant une première surface principale et une seconde surface principale, et ledit substrat présentant un gradient de porosité depuis la première surface principale jusqu'à la seconde surface principale ; à une oxydation partielle par un gaz oxydant tel que l'oxygène et/ou l'air.

2. Substrat selon la revendication 1, dans lequel l'oxydation partielle est réalisée à haute température et pendant une courte durée, de préférence l'oxydation partielle est réalisée à une température de 600°C à 1600°C pendant une durée de 1 à 20 minutes, de préférence de 1 à 10 minutes.

3. Substrat selon la revendication 1, dans lequel substantiellement toutes, et de préférence toutes les particules du substrat sont oxydées, et chacune de ces particules est partiellement oxydée.

4. Substrat selon la revendication 1, dans lequel la première surface principale et la seconde surface principale sont des surfaces planes et parallèles.

5. Substrat selon l'une quelconque des revendications 1 à 4, dans lequel la première surface principale est une surface supérieure et la seconde surface principale est une surface inférieure.

6. Substrat selon l'une quelconque des revendications précédentes, dans lequel la porosité diminue depuis la seconde surface principale jusqu'à la première surface principale.

7. Substrat selon la revendication 6, dans lequel le substrat comprend depuis la seconde surface principale vers la première surface principale au moins une couche de forte porosité au contact de la seconde surface principale et une couche de faible porosité au contact de la première surface principale, de préférence la couche de forte porosité a une porosité de 25% à 65%, avantageusement de 30% à 60%, et la couche de faible porosité a une porosité de 10% à 40%, avantageusement de 10% à 30%, étant entendu que la couche de faible porosité a une porosité inférieure à la couche de forte porosité.

8. Substrat selon la revendication 7, dans lequel la couche de forte porosité comprend des gros pores d'une taille, par exemple d'un diamètre, de plus de 20 µm à 50 µm, et la couche de faible porosité comprend des petits pores d'une taille, par exemple d'un diamètre, de 1 µm à 20 µm.

9. Substrat selon la revendication 8, dans lequel la couche de forte porosité a une épaisseur de 100 µm à 5 mm et la couche de faible porosité a une épaisseur de 20 µm à 500 µm, de préférence de 50 µm à 100 µm.

10. Substrat selon l'une quelconque des revendications précédentes, dans lequel le métal ou alliage est choisi parmi le fer, les alliages à base de fer, le chrome, les alliages à base de chrome, les alliages fer-chrome, les aciers inoxydables, le nickel, les alliages à base de nickel, les alliages nickel-chrome, les alliages contenant du cobalt, les alliages contenant du manganèse, l'aluminium et les alliages contenant de l'aluminium.

11. Substrat selon l'une quelconque des revendications 7 à 10, dans lequel la couche de faible porosité est en un premier métal ou alliage métallique et la couche de forte porosité est en un second métal ou alliage métallique, ou bien la couche de forte porosité et la couche de faible porosité sont en un même métal ou alliage métallique, de préférence le premier métal ou alliage est choisi parmi le chrome, les alliages à base de chrome, les alliages Fer-chrome, les aciers inoxydables, le nickel, les alliages à base de nickel, les alliages nickel-chrome, et le second métal ou alliage est choisi parmi le chrome, les alliages à base de chrome, les alliages Fer-chrome, les aciers inoxydables, le nickel, les alliages à base de nickel, les alliages nickel-chrome.

12. Substrat selon l'une quelconque des revendications 7 à 11, dans lequel une ou plusieurs couche(s) intermédiaire(s) est(sont) prévue(s) entre la couche de forte porosité et la couche de faible porosité, la ou les couche(s) intermédiaire(s) présentant une porosité telle que la porosité du substrat diminue depuis la couche de forte porosité jusqu'à la couche de faible porosité.

13. Procédé de préparation du substrat selon l'une quelconque des revendications 1 à 12 dans lequel on effectue les étapes successives suivante :
- on dépose successivement, dans un moule vertical de taille et de forme adaptées à la forme et à la taille du substrat, au moins deux couches de poudres métalliques ayant des granulométries décroissantes, respectivement croissantes ;
- on presse lesdites couches, de préférence avec une pression de 10 à 700 MPa, de préférence encore de 100 MPa, de manière à obtenir un substrat poreux cru ;
- on sépare le substrat poreux cru du moule ;
- on fritte le substrat poreux cru ;
- à l'issue du frittage, on réalise une oxydation partielle du substrat en mettant en contact le substrat avec un gaz oxydant tel que l'air et/ou l'oxygène.

14. Procédé selon la revendication 13, dans lequel l'oxydation partielle est réalisée à une température élevée et pendant une courte durée, de préférence l'oxydation partielle est réalisée à une température de 600°C à 1600°C pendant une durée de 1 à 20 minutes, de préférence de 1 à 10 minutes..

15. Procédé selon la revendication 13 ou 14, dans lequel on dépose d'abord une couche inférieure constituée par une poudre de forte granulométrie puis une couche supérieure constituée par une poudre de faible granulométrie, ou vice et versa, de préférence la poudre de forte granulométrie a une granulométrie de plus de 50 µm à 500 µm et la poudre de faible granulométrie a une granulométrie de 1 µm à 50 µm.

16. Procédé selon l'une quelconque des revendications 13 à 15, dans lequel une ou plusieurs couche(s) intermédiaire(s) constituée(s) par des poudres présentant une granulométrie intermédiaire entre la granulométrie de la poudre constituant la couche inférieure, respectivement supérieure de forte granulométrie, et la granulométrie de la poudre constituant la couche supérieure, respectivement inférieure de faible granulométrie est(sont) déposée(s) entre la couche inférieure et la couche supérieure, la granulométrie de ces couches étant telle qu'elle diminue depuis la couche intermédiaire la plus proche de la couche constituée par une poudre de forte granulométrie jusqu'à la couche intermédiaire la plus proche de la couche constituée par une poudre de faible granulométrie.

17. Procédé selon la revendication 16, dans lequel on dépose de 1 à 8 couches intermédiaires.

18. Procédé selon l'une quelconque des revendications 13 à 17, dans lequel toutes les couches de poudre, y compris les couches intermédiaires éventuelles, sont constituées par un même alliage ou métal ou bien une ou plusieurs couches de poudre peuvent être constituées par un métal ou alliage différent des autres couches.

19. Procédé selon l'une quelconque des revendications 13 à 18, dans lequel le pressage est réalisé par compression uniaxiale.

20. Procédé selon l'une quelconque des revendications 13 à 19, dans lequel le frittage est réalisé à une température comprise entre la température minimum de début de frittage et la température de densification totale du substrat, et de préférence à une température correspondant à 85% de la température de densification totale du substrat, de préférence la température de frittage est de 600°C à 1600°C, de préférence encore de 800°C à 1400°C, par exemple de 1200°C.

21. Cellule d'électrolyseur à haute température ou de pile à combustible comprenant un substrat partiellement oxydé selon l'une quelconque des revendications 1 à 12.

22. Cellule d'électrolyseur à haute température ou de pile à combustible selon la revendication 21, dans laquelle une électrode à eau ou à hydrogène, un électrolyte, et une électrode à oxygène ; ou bien une électrode à oxygène, un électrolyte, et une électrode à hydrogène ou à eau, sont successivement empilés sur le substrat partiellement oxydé.

## Claims

1. A partly oxidized substrate, obtained by subjecting a substrate made of a porous metal or metal alloy comprising particles of at least one metal or metal alloy bound by sintering, said substrate comprising a first main surface and a second main surface, and said substrate having a porosity gradient from the first main surface to as far as the second main surface; to partial oxidation by an oxidizing gas such as oxygen and/or air.

2. The substrate according to claim 1, wherein the partial oxidation is carried out at a high temperature and for a short duration, preferably the partial oxidation is carried out at a temperature from 600°C to 1,600°C for a duration of 1 to 20 minutes, preferably from 1 to 10 minutes.

3. The substrate according to claim 1, wherein substantially all, and preferably all the particles of the substrate are oxidized, and each of these particles is partly oxidized.

4. The substrate according to claim 1, wherein the first main surface and the second main surface are planar and parallel surfaces.

5. The substrate according to any one of claims 1 to 4, wherein the first main surface is an upper surface and the second main surface is a lower surface.

6. The substrate according to any one of the preceding claims, wherein the porosity decreases from the second main surface to as far as the first main surface.

7. The substrate according to claim 6, wherein the substrate comprises from the second main surface to the first main surface at least one high porosity layer in contact with the second main surface and a low porosity layer in contact with the first main surface, preferably the high porosity layer has a porosity from 25% to 65%, advantageously from 30% to 60%, and the low porosity layer has a porosity from 10% to 40%, advantageously from 10% to 30%, it being understood that the low porosity layer has a porosity less than that of the high porosity layer.

8. The substrate according to claim 7, wherein the high porosity layer comprises large pores with a size, for example a diameter, of more than 20 µm to 50 µm, and the low porosity layer comprises small pores with a size, for example a diameter, from 1 µm to 20 µm.

9. The substrate according to claim 8, wherein the high porosity layer has a thickness of 100 µm to 5 mm and the small porosity layer has a thickness from 20 µm to 500 µm, preferably from 50 µm to 100 µm.

10. The substrate according to any one of the preceding claims, wherein the metal or alloy is selected from iron, iron-based alloys, chromium, chromium-based alloys, iron-chromium alloys, stainless steels, nickel, nickel-based alloys, nickel-chromium alloys, alloys containing cobalt, alloys containing manganese, aluminium and alloys containing aluminium.

11. The substrate according to any one of claims 7 to 10, wherein the low porosity layer is made of a first metal or metal alloy and the high porosity layer is made of a second metal or metal alloy, or else the high porosity layer and the low porosity layer are made of a same metal or metal alloy, preferably the first metal or alloy is selected from chromium, chromium-based alloys, iron-chromium alloys, stainless steels, nickel, nickel-based alloys, nickel-chromium alloys, and the second metal or alloy is selected from chromium, chromium-based alloys, iron-chromium alloys, stainless steels, nickel, nickel-based alloys, nickel-chromium alloys.

12. The substrate according to any one of claims 7 to 11, wherein one or more intermediate layer(s) are provided between the high porosity layer and the low porosity layer, the intermediate layer(s) having a porosity such that the porosity of the substrate decreases from the high porosity layer to as far as the low porosity layer.

13. Method for preparing the substrate according to any one of claims 1 to 12 wherein the following successive steps are carried out:
- at least two layers of metal powders having decreasing, respectively increasing grain sizes are successively deposited in a vertical mold with a size and shape adapted to the shape and to the size of the substrate;
- said layers are pressed, preferably with a pressure from 10 to 700 MPa, more preferably of 100 MPa, so as to obtain a green porous substrate;
- the green porous substrate is separated from the mold;
- the green porous substrate is sintered;
- at the end of the sintering, partial oxidation of the substrate is performed by putting the substrate in contact with an oxidizing gas such as air and/or oxygen.

14. The method according to claim 13, wherein partial oxidation is carried out at a high temperature and for a short duration, preferably the partial oxidation is carried out at a temperature from 600°C to 1,600°C for a duration of 1 to 20 minutes, preferably from 1 to 10 minutes.

15. The method according to claim 13 or 14, wherein a lower layer consisting of a powder of large grain size, is deposited first, followed by an upper layer consisting of a powder of small grain size, or vice versa, preferably the powder of large grain size has a grain size of more than 50 µm to 500 µm, and the powder of small grain size has a grain size from 1 µm to 50 µm.

16. The method according to any one of claims 13 to 15, wherein one or more intermediate layer(s) consisting of powders having an intermediate grain size between the grain size of the powder constituting the lower layer, respectively the upper layer of large grain size, and the grain size of the powder constituting the upper layer, respectively lower layer of small grain size, is(are) deposited between the lower layer and the upper layer, the grain size of these layers being such that it decreases from the intermediate layer which is closest to the layer consisting of a powder of large grain size to as far as the intermediate layer which is closest to the layer consisting of a powder of small grain size.

17. The method according to claim 16, wherein 1 to 8 intermediate layers are deposited.

18. The method according to any one of claims 13 to 17, wherein all the powder layers, including the optional intermediate layers, consist of a same alloy or metal or else one or more powder layers may consist in a metal or alloy different from that of the other layers.

19. The method according to any one of claims 13 to 18, wherein the pressing is carried out by uniaxial compression.

20. The method according to any one of claims 13 to 19, wherein the sintering is carried out at a temperature comprised between the minimum temperature for starting the sintering and the total densification temperature of the substrate, and preferably at a temperature corresponding to 85% of the total densification temperature of the substrate, preferably the sintering temperature is from 600°C to 1,600°C, preferably from 800°C to 1,400°C, for example 1,200°C.

21. A high temperature electrolyzer cell or cell of a fuel cell comprising a partly oxidized substrate according to any one of claims 1 to 12.

22. The high temperature electrolyzer cell or cell of a fuel cell according to claim 21, wherein a water or hydrogen electrode, an electrolyte, and an oxygen electrode are successively stacked on the partly oxidized substrate.

## Patentansprüche

1. Partiell oxidiertes Substrat erhalten durch Unterziehen eines porösen Substrats aus Metall oder einer Metalllegierung, das Teilchen aus wenigstens einem durch Sintern verbundenen Metall oder einer Metalllegierung umfasst, wobei das Substrat eine erste Hauptoberfläche und eine zweite Hauptoberfläche umfasst und das Substrat einen Porositätsgradienten von der ersten Hauptoberfläche bis zur zweiten Hauptoberfläche aufweist, einer partiellen Oxidation durch ein oxidierendes Gas wie etwa Sauerstoff und/oder Luft.

2. Substrat gemäß Anspruch 1, bei dem die partielle Oxidation bei hoher Temperatur und während eines kurzen Zeitraums durchgeführt wird, wobei die partielle Oxidation vorzugsweise bei einer Temperatur von 600 °C bis 1600 °C während eines Zeitraums von 1 bis 20 Minuten, vorzugsweise 1 bis 10 Minuten durchgeführt wird.

3. Substrat gemäß Anspruch 1, wobei im Wesentlichen alle und vorzugsweise alle Substratteilchen oxidiert sind und jedes dieser Teilchen partiell oxidiert ist.

4. Substrat gemäß Anspruch 1, bei dem die erste Hauptoberfläche und die zweite Hauptoberfläche ebene und parallele Oberflächen sind.

5. Substrat gemäß einem der Ansprüche 1 bis 4, bei dem die erste Hauptoberfläche eine oben liegende Oberfläche ist und die zweite Hauptoberfläche eine unten liegende Oberfläche ist.

6. Substrat gemäß einem der vorangehenden Ansprüche, bei dem die Porosität von der zweiten Hauptoberfläche bis zur ersten Hauptoberfläche abnimmt.

7. Substrat gemäß Anspruch 6, bei dem das Substrat von der zweiten Hauptoberfläche zur ersten Hauptoberfläche wenigstens eine Schicht hoher Porosität im Kontakt mit der zweiten Hauptoberfläche und eine Schicht niedriger Porosität im Kontakt mit der ersten Hauptoberfläche umfasst, wobei die Schicht hoher Porosität vorzugsweise eine Porosität von 25 % bis 65 %, vorteilhafterweise 30 % bis 60 % aufweist und die Schicht niedriger Porosität eine Porosität von 10 % bis 40 %, vorteilhafterweise 10 % bis 30 % aufweist, vorausgesetzt, dass die Schicht niedriger Porosität eine niedrigere Porosität als die Schicht hoher Porosität aufweist.

8. Substrat gemäß Anspruch 7, bei dem die Schicht hoher Porosität große Poren mit einer Größe, zum Beispiel einem Durchmesser von mehr als 20 µm bis 50 µm umfasst und die Schicht niedriger Porosität kleine Poren mit einer Größe, zum Beispiel einem Durchmesser von 1 µm bis 20 µm umfasst.

9. Substrat gemäß Anspruch 8, bei dem die Schicht hoher Porosität eine Dicke von 100 µm bis 5 mm und die Schicht niedriger Porosität eine Dicke von 20 µm bis 500 µm, vorzugsweise 50 µmbis 100 µm aufweist.

10. Substrat gemäß einem der vorangehenden Ansprüche, bei dem das Metall oder die Legierung aus Eisen, Legierungen auf Eisengrundlage, Chrom, Legierungen auf Chromgrundlage, Eisen-Chrom-Legierungen, Edelstählen, Nickel, Legierungen auf Nickelgrundlage, Nickel-Chrom-Legierungen, cobalthaltigen Legierungen, manganhaltigen Legierungen, Aluminium und aluminiumhaltigen Legierungen ausgewählt sind.

11. Substrat gemäß einem der Ansprüche 7 bis 10, bei dem die Schicht niedriger Porosität aus einem ersten Metall oder einer Metalllegierung ist und die Schicht niedriger Porosität aus einem zweiten Metall oder Metalllegierung ist oder die Schicht hoher Porosität und die Schicht niedriger Porosität aus demselben Metall oder Metalllegierung sind, wobei vorzugsweise das erste Metall oder Metalllegierung aus Chrom, Legierungen auf Chromgrundlage, Eisen-Chrom-Legierungen, Edelstählen, Nickel, Legierungen auf Nickelgrundlage und Nickel-Chrom-Legierungen ausgewählt sind und das zweite Metall oder Metalllegierung aus Chrom, Legierungen auf Chromgrundlage, Eisen-Chrom-Legierungen, Edelstählen, Nickel, Legierungen auf Nickelgrundlage und Nickel-Chrom-Legierungen ausgewählt sind.

12. Substrat gemäß einem der Ansprüche 7 bis 11, bei dem eine oder mehrere Zwischenschicht(en) zwischen der Schicht hoher Porosität und der Schicht niedriger Porosität vorgesehen ist (sind), wobei die Zwischenschicht(en) eine Porosität dergestalt aufweist, dass die Porosität des Substrats von der Schicht hoher Porosität bis zur Schicht niedriger Porosität abnimmt.

13. Verfahren zur Herstellung des Substrats gemäß einem der Ansprüche 1 bis 12, wobei die folgenden aufeinanderfolgenden Schritte ausgeführt werden:
- in eine senkrechte, an die Substratform und -größe angepasste Form werden mindestens zwei Metallpulverschichten mit abnehmenden beziehungsweise zunehmenden Korngrößen eingebracht;
- diese Schichten werden mit einem Druck von vorzugsweise 10 bis 700 MPa, bevorzugter 100 MPa unter Erhalt eines grünen, porösen Substrats verpresst;
- das grüne, poröse Substrat wird aus der Form entfernt;
- das grüne, poröse Substrat wird gesintert;
- nach dem Sintern wird eine partielle Oxidation des Substrats durchgeführt, indem das Substrat mit einem oxidierenden Gas wie etwa Luft und/oder Sauerstoff in Kontakt gebracht wird.

14. Substrat gemäß Anspruch 13, wobei die partielle Oxidation bei erhöhter Temperatur und während eines kurzen Zeitraums durchgeführt wird und die partielle Oxidation vorzugsweise bei einer Temperatur von 600 °C bis 1600 °C während eines Zeitraums von 1 bis 20 Minuten, vorzugsweise 1 bis 10 Minuten durchgeführt wird.

15. Verfahren gemäß Anspruch 13 oder 14, wobei zuerst eine sich aus einem Pulver hoher Korngröße zusammensetzende untere Schicht und dann eine sich aus einem Pulver niedriger Korngröße zusammensetzende obere Schicht oder umgekehrt aufgebracht werden, und vorzugsweise das Pulver hoher Korngröße eine Korngröße von mehr als 50 µm bis 500 µm aufweist und das Pulver niedriger Korngröße eine Korngröße von 1 µm bis 50 µm aufweist.

16. Verfahren gemäß einem der Ansprüche 13 bis 15, wobei eine oder mehrere Zwischenschicht(en), die sich aus Pulvern zusammensetzt (zusammensetzen), die eine Zwischenkorngröße zwischen der Korngröße des die untere beziehungsweise obere Schicht hoher Korngröße darstellenden Pulvers und der Korngröße des die obere beziehungsweise untere Schicht niedriger Korngröße darstellenden Pulvers aufweisen, zwischen der unteren Schicht und der oberen Schicht aufgebracht wird (werden), wobei die Korngröße dieser Schichten solcherart ist, dass sie von der Zwischenschicht, die zu der sich aus einem Pulver mit hoher Korngröße zusammensetzenden Schicht am nächsten ist, bis zu der Zwischenschicht, die zu der sich aus einem Pulver mit niedriger Korngröße zusammensetzenden Schicht am nächsten ist, abnimmt.

17. Verfahren gemäß Anspruch 16, wobei 1 bis 8 Zwischenschichten aufgebracht werden.

18. Verfahren gemäß einem der Ansprüche 13 bis 17, wobei sich alle Pulverschichten einschließlich wahlfreier Zwischenschichten aus derselben Legierung oder Metall zusammensetzen oder sich eine oder mehrere Pulverschichten aus einem Metall oder einer Legierung zusammensetzen können, die von denen der anderen Schichten verschieden sind.

19. Verfahren gemäß einem der Ansprüche 13 bis 18, wobei das Verpressen durch einachsige Kompression durchgeführt wird.

20. Verfahren gemäß einem der Ansprüche 13 bis 19, wobei das Sintern bei einer Temperatur zwischen der Mindesttemperatur für den Sinterungsbeginn und der Temperatur der vollständigen Substratverfestigung und vorzugsweise bei einer 85 % der Temperatur der vollständigen Substratverfestigung durchgeführt wird und die Sintertemperatur vorzugsweise 600 °C bis 1600 °C, bevorzugter 800 °C bis 1400 °C und zum Beispiel 1200 °C beträgt.

21. Hochtemperatur-Elektrolysezelle oder Brennstoffzelle umfassend ein partiell oxydiertes Substrat gemäß einem der Ansprüche 1 bis 12.

22. Hochtemperatur-Elektrolysezelle oder Brennstoffzelle gemäß Anspruch 21, wobei eine Wasser- oder Wasserstoffelektrode, ein Elektrolyt und eine Sauerstoffelektrode oder eine Sauerstoffelektrode, ein Elektrolyt und eine Wasserstoff- oder Wasserelektrode nacheinander auf dem partiell oxidierten Substrat gespeichert sind.
